# EUROPEAN PATENT APPLICATION

(11) **EP 3 453 485 A2**
(43) Date of publication of application: **13.03.2019**
(21) Application number: 18185236.9
(22) Date of filing: 24.07.2018
(51) Int. Cl.: B23Q 11/10

(54) **NOZZLE, NOZZLE FIXING STRUCTURE, AND NOZZLE ASSEMBLY**

(30) Priority: 08.09.2017 KR 20170115171; 19.09.2017 JP 2017179426; 30.10.2017 JP 2017209725; 10.01.2018 KR 20180003605
(71) Applicant: Sio Co., Ltd., Hachioji-shi, Tokyo 193-0822 (JP)
(72) Inventor: Komazawa, Masuhiko, Tokyo, 192-0152 (JP)
(74) Representative: Gulde & Partner

(57) **Abstract**

An embodiment of the present invention provides a nozzle assembly (9, 90, 190, 290, 390, 490, 590, 690) characterized by including a base module (10, 110, 210), and a nozzle module (20, 30, 40, 50, 60, 70, 80) for discharging a fluid entering the nozzle assembly (9, 90, 190, 290, 390, 490, 590, 690) to the outside. The base module (10, 110, 210) includes a supporting member (11) comprising a shaft portion (11-4 and 11-6), a dial-type handle (11-1) for rotating the supporting member (11), and a fixing member (16, 19) for detachably fixing the nozzle module (20, 30, 40, 50, 60, 70, 80). The nozzle module (20, 30, 40, 50, 60, 70, 80) has one or a plurality of flow paths (54-4, 65-4, 70-4, 80-4) formed in a direction orthogonal to the shaft portion (11-4 and 11-6) of the supporting member (11) of the base module (10, 110, 210). The angle of the nozzle module (20, 30, 40, 50, 60, 70, 80) with respect to the shaft portion (11-4 and 11-6) of the supporting member (11) of the base module (10, 110, 210) is adjusted by manual rotation of the dial-type handle (11-1).

## Description

### BACKGROUND OF THE INVENTION

### 1. Field of the Invention

The present invention relates to a nozzle for supplying a fluid, a nozzle fixing structure, and a nozzle assembly. More specifically, the present invention relates to a nozzle which discharges a fluid such as water, a nozzle fixing structure for fixing a nozzle module to a fluid supply apparatus, and a nozzle assembly including the nozzle fixing structure. The present invention is applicable to coolant supply apparatuses for various machine tools such as a grinding machine, a drilling machine, and a cutting machine.

### 2. Description of the Related Art

Conventionally, when a workpiece made of a metal or the like is machined into a desired shape by a machine tool such as the grinding machine or the drilling machine, coolant is supplied to a predetermined area including a contact portion between the workpiece and a tool such as a blade to cool heat generated during machining or remove debris of the workpiece (also referred to as chips) from a machining spot. Cutting heat caused by high pressure and frictional resistance at the contact portion between the workpiece and the blade abrades the edge of the blade and lowers the strength of the blade, thereby reducing tool life of the blade. In addition, if the chips of the workpiece are not sufficiently removed, they can stick to the edge of the blade during machining, which may degrade machining accuracy. The coolant decreases the frictional resistance between the tool and the workpiece, removes the cutting heat, and performs cleaning to remove the chips cut off from a surface of the workpiece. Therefore, for the machine tool, it is important to discharge the coolant to the contact portion between the tool and the workpiece and the periphery thereof accurately and efficiently.

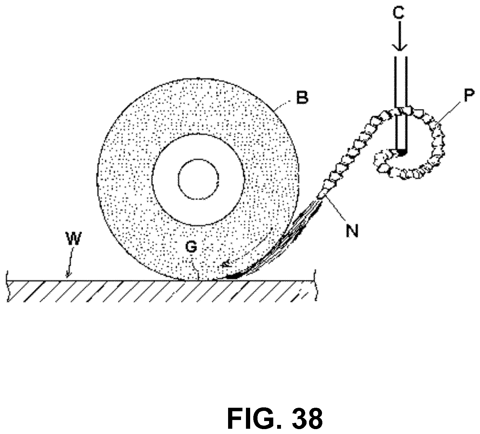

Fig. 38 shows a conventional grinding machine. A surface of a workpiece W is ground by friction between the outer circumferential surface of a grinding blade (a grindstone) B and the workpiece W at a grinding spot G. As shown in the drawing, the grinding machine includes a coolant supply unit for supplying coolant C and the coolant supply unit includes a pipe P and a nozzle N for discharging the coolant C toward the grinding blade B and the workpiece W. By using a flexible and elastic hose, for example, an easily bendable bellows hose, as the pipe P, it is possible to discharge the coolant C toward the grinding spot G.

Japanese Utility Model Application Laid-Open Publication No. 1985-175981 published on November 21, 1985 (Patent Document 1), discloses a conduit for supplying coolant, or the like, and a nozzle coupled to the end of the conduit. It is possible to obtain a desired length of the conduit by connecting a plurality of pairs of female and male units in spherical contraposition to each other. The nozzle may have a female part forming spherical contraposition with a male part of the conduit on the inlet side and be formed in the shape of a truncated cone on the outlet side. Otherwise, the nozzle may have a thickness dimension gradually decreasing and a width dimension gradually increasing toward the outlet.

Conventionally, in the case that the width of the grinding blade is wide, a plurality of nozzles are provided and discharge the coolant simultaneously to supply the coolant over a wide range. For example, as shown in Fig. 39, Japanese Patent Application Laid-Open Publication No. 2013-22717 published on February 4, 2013 (Patent Document 2), discloses a dicing machine including three nozzles for discharging the coolant. A pipe through which the coolant flows branches into three branch pipes and each of the three nozzles N is provided at the end of each of the three branch pipes. The coolant discharged from the three nozzles N reaches P1, P2 and P3 which are points on a dicing blade. Each of the nozzles N is integrated with the dicing blade and moves together with the dicing blade along the x-axis direction while maintaining a positional relationship with the dicing blade.

In the case of using the conduit and the nozzle disclosed in Patent Document 1 as a coolant supply means of the machine tool, the direction of discharge of the coolant from the nozzle tip cannot be precisely determined, and it is difficult to discharge the coolant to a target position or in a target direction. Further, since a pipe provided with a predetermined number of nozzle(s) is used according to conventional technology such as that disclosed in Patent Documents 1 or 2, the conventional technology does not consider increase and decrease of the number of nozzles and adjustment of positions of a plurality of nozzles. Thus, in the case that the type of the machine tool, the shape or size of the tool such as the grinding blade, the shape or size of the workpiece, or the like, is changed, there still exists a problem of low accuracy and low efficiency in discharging the coolant toward a predetermined area including the contact portion between the tool and the workpiece.

### SUMMARY OF THE INVENTION

The present invention was made in view of the problems mentioned above. An object of the present invention is to provide a nozzle assembly capable of including various types of nozzle modules by assembly of components, a nozzle for the nozzle assembly, and a nozzle fixing structure.

In order to achieve the above object, an aspect of the present invention provides a nozzle assembly including a nozzle assembly including a base module and a nozzle module for discharging a fluid entering the nozzle assembly to the outside. The base module includes a supporting member comprising a shaft portion, a dial-type handle for rotating the supporting member, and a fixing member for detachably fixing the nozzle module. The nozzle module has one or a plurality of flow paths formed in a direction orthogonal to the shaft portion of the supporting member of the base module. The angle of the nozzle module with respect to the shaft portion of the supporting member of the base module is adjusted by manual rotation of the dial-type handle.

Another aspect of the present invention provides a nozzle which can be detachably fixed to a nozzle assembly for discharging a fluid. The nozzle has one or a plurality of holes through it and the one hole or each of the plurality of holes forms a flow path. The cross-section of the one hole or each of the plurality of holes is polygonal, star-shaped, or flower-shaped.

Another aspect of the present invention provides a nozzle fixing structure for fixing a nozzle module having one or a plurality of flow paths for discharging a fluid to a fluid supply apparatus, which includes a supporting member comprising a shaft portion, a dial-type handle for rotating the supporting member, and a fixing member for detachably fixing the nozzle module. The nozzle module is fixed such that the one or the plurality of flow paths are arranged in a direction orthogonal to the shaft portion of the supporting member. The angle of the nozzle module with respect to the shaft portion of the supporting member is adjusted by manual rotation of the dial-type handle.

A further aspect of the present invention provides a nozzle module including a body portion having a cavity, and an extension portion having one or more flow paths. A fluid is discharged from an end of each of the one or more flow paths. A path through which the fluid flows is sharply narrowed between the body portion and the extension portion, and the fluid is discharged from the end of the flow path at a high pressure.

According to many embodiments of the present invention, a nozzle assembly includes a base module and a nozzle module and the nozzle module is detachably connected to the base module which is a nozzle fixing structure. Thus, it is possible to easily change the type of the nozzle, increase or decrease the number of the nozzles, or select one of nozzles having various flow paths, according to the shape of the grinding blade (or the grindstone), the material of the workpiece, and/or the type of machining. By this, a machine tool including various types of coolant nozzles can be provided, and a fluid such as coolant can be discharged at a proper position or angle, and with a suitable intensity.

In addition, according to many embodiments of the present invention, one or a plurality of nozzles of the nozzle assembly can be rotatably connected to a shaft portion of a supporting member of the base module. Thus, it is possible to easily adjust the position at which the fluid is discharged. Therefore, it is possible to accurately and efficiently discharge the fluid such as the coolant to a target.

### BRIEF DESCRIPTION OF THE DRAWINGS

The above and further objects and novel features of the present invention will more fully appear from the following detailed description when the same is read in conjunction with the accompanying drawings. It is to be expressly understood, however, that the drawings are for the purpose of illustration only and are not intended to limit the scope of the invention.

Here:
Fig. 1 shows an example of a machine tool including a nozzle assembly according to a first embodiment of the present invention.
Fig. 2A is an exploded view of a base module of the nozzle assembly according to the first embodiment of the present invention.
Fig. 2B shows assembled components of the base module shown in Fig. 2A.
Fig. 3A is an exploded view of a nozzle module of the nozzle assembly according to the first embodiment of the present invention.
Fig. 3B shows one of a plurality of nozzles shown in Fig. 3A.
Fig. 3C shows one of the plurality of nozzles shown in Fig. 3A.
Fig. 4 is a perspective view of the nozzle assembly according to the first embodiment of the present invention.
Fig. 5 shows an example of a machine tool including a nozzle assembly according to a second embodiment of the present invention.
Fig. 6 is an exploded view of a nozzle module of the nozzle assembly according to the second embodiment of the present invention.
Fig. 7 is a perspective view of the nozzle assembly according to the second embodiment of the present invention.
Fig. 8 is a perspective view of a nozzle assembly according to a third embodiment of the present invention.
Fig. 9 shows an example of a machine tool including a nozzle assembly according to a fourth embodiment of the present invention.
Fig. 10 is an exploded view of a nozzle module of the nozzle assembly according to the fourth embodiment of the present invention.
Fig. 11 is a perspective view of the nozzle assembly according to the fourth embodiment of the present invention.
Fig. 12A is a cross-sectional view of the nozzle assembly of Fig. 11.
Fig. 12B is a cross-sectional view of the nozzle assembly of Fig. 11 viewed from an angle different from that of Fig. 12A.
Fig. 13 shows another example of a machine tool including the nozzle assembly of the fourth embodiment of the present invention.
Fig. 14 shows an example of a machine tool including a nozzle assembly according to a fifth embodiment of the present invention.
Fig. 15 is an exploded view of a nozzle module of the nozzle assembly according to the fifth embodiment of the present invention.
Fig. 16 is a perspective view of the nozzle assembly according to the fifth embodiment of the present invention.
Fig. 17 is a cross-sectional view of the nozzle assembly of Fig. 16.
Fig. 18 shows cross-sectional views of a tube portion of a nozzle.
Fig. 19 shows perspective views of the tube portion of the nozzle corresponding to the cross-sectional views of Fig. 18.
Fig. 20 shows an example of a machine tool including a nozzle assembly according to a seventh embodiment of the present invention.
Fig. 21A is an exploded view of the nozzle assembly according to the seventh embodiment of the present invention.
Fig. 21B shows a state in which components of the nozzle assembly shown in Fig. 21A are being assembled.
Fig. 22 is a perspective view of the nozzle assembly which has been assembled according to the seventh embodiment of the present invention.
Fig. 23 is a cross-sectional view of the nozzle assembly of Fig. 22.
Fig. 24 is a cross-sectional view of the nozzle assembly of Fig. 22 viewed from an angle different from that of Fig. 23.
Fig. 25 is a perspective view of a nozzle assembly according to an eighth embodiment of the present invention.
Fig. 26 is a cross-sectional view of the nozzle assembly of Fig. 25.
Fig. 27 shows another example of a machine tool including the nozzle assembly of the seventh embodiment of the present invention.
Fig. 28 shows an example of a machine tool including a nozzle assembly according to a ninth embodiment of the present invention.
Fig. 29 shows a state in which components of a base module and a nozzle module of the nozzle assembly are being assembled according to the ninth embodiment of the present invention.
Fig. 30 is a perspective view of the nozzle assembly which has been assembled according to the ninth embodiment of the present invention.
Fig. 31 is a cross-sectional view of the nozzle assembly of Fig. 30.
Fig. 32 is a cross-sectional view of the nozzle assembly of Fig. 30 viewed from an angle different from that of Fig. 31.
Fig. 33 shows perspective views of a tube portion of a nozzle.
Fig. 34 shows cross-sectional views of the tube portion of the nozzle.
Fig. 35A is a partial cross-sectional view of the fluid inlet side of the nozzle shown in (A) of Fig. 33 and (A) of Fig. 34.
Fig. 35B is a perspective view showing the exterior of the nozzle of Fig. 35A.
Fig. 36A is a partial cross-sectional view of the fluid inlet side of the nozzle shown in (D) of Fig. 33 and (D) of Fig. 34.
Fig. 36B is a perspective view showing the exterior of the nozzle of Fig. 36A.
Fig. 37 shows another example of a machine tool including the nozzle assembly of the ninth embodiment of the present invention.
Fig. 38 shows an example of a grinding machine including a conventional coolant supply means.

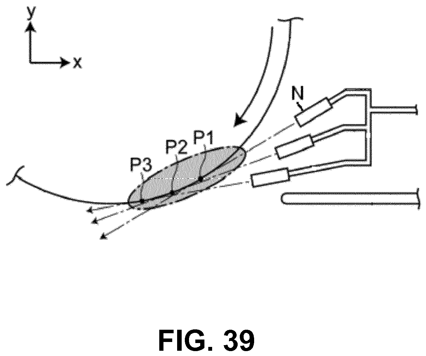

Fig. 39 shows an example of a conventional dicing machine.

### DETAILED DESCRIPTION OF THE PREFERRED EMBODIMENT

Embodiments in which a nozzle assembly of the present invention is applied to machine tools such as a grinding machine will be mainly described herein. However, the field of application of the present invention is not intended to be limited to the illustrated examples. The nozzle assembly of the present invention is applicable to various situations requiring supply of a fluid.

Hereinafter, the embodiments of the present invention will be described with reference to the accompanying drawings.

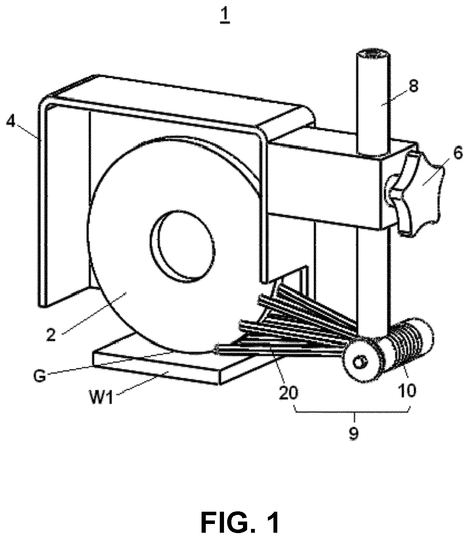

Fig. 1 shows an example of a machine tool including a nozzle assembly according to a first embodiment of the present invention. The machine tool of the present example is a surface grinding machine. A surface grinding machine 1 includes a grinding blade (a grindstone) 2, a protection cover 4, a height adjusting unit 6, a coolant pipe 8, and a nozzle assembly 9. Although not shown in the drawing, the surface grinding machine 1 includes a table for moving a workpiece W1 in a plane, and a column for vertically moving the workpiece W1 or the grinding blade 2.

The grinding blade 2 is rotationally driven in the clockwise direction in the plane of Fig. 1 by a driving source (not shown in the drawing). A surface of the workpiece W1 is ground by friction between the outer circumferential surface of the grinding blade 2 and the workpiece W1 at a grinding spot G. The protection cover 4 surrounds the grinding blade 2 rotating at a high speed and protects workers around the grinding machine by preventing chips of the workpiece W1 from scattering during grinding.

The height adjusting unit 6 is provided on the protection cover 4, and fixes the coolant pipe 8 movable up and down at a desired height. By this, it is possible to position the nozzle assembly 9 connected to the coolant pipe 8 at a suitable height with respect to the grinding blade 2 and the workpiece W1. The nozzle assembly 9 is connected to one end of the coolant pipe 8 and a tank in which coolant (for example, water, oil, or the like) is stored (not shown in the drawing) is connected to the other end of the coolant pipe 8. The nozzle assembly 9 includes a base module 10 and a nozzle module 20. The base module 10 is a nozzle fixing structure for fixing the nozzle module 20 to the coolant pipe 8 and connects the nozzle module 20 and the coolant pipe 8 to allow the coolant to flow into the nozzle module 20 through the coolant pipe 8. Further, the base module 10 fixes each of a plurality of nozzles of the nozzle module 20 in a proper position.

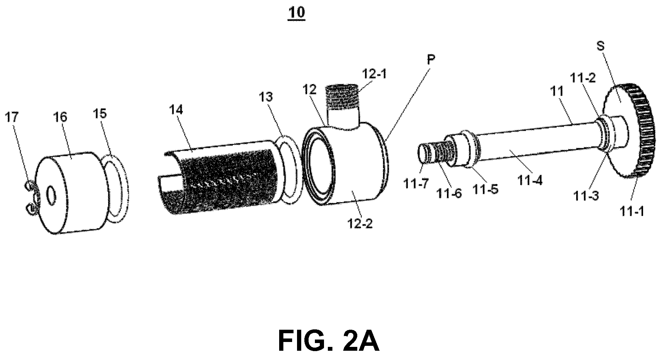

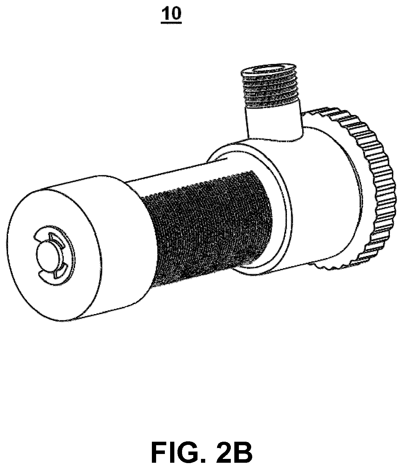

Fig. 2A is an exploded view of the base module 10 of the nozzle assembly 9 according to the first embodiment of the present invention. Fig. 2B shows assembled components of the base module 10 shown in Fig. 2A. The base module 10 includes a supporting member 11, a connecting member 12, a packing element 13, a mesh member 14, a packing element 15, a stopper 16, and an E-ring 17. The supporting member 11 includes a dial-type handle 11-1 which can be rotated by an operator, a first step portion 11-2 and a ring 11-3 for guiding the connecting member 12 to be in position, a first shaft portion 11-4 penetrating the center of the base module 10, a second step portion 11-5 for fixing the stopper 16 at a predetermined position in the axial direction and preventing the coolant from flowing out to the outside, a second shaft portion 11-6 which is inserted into a through-hole formed in the stopper 16, and an end portion 11-7 which is exposed out of the through-hole of the stopper 16. The components of the supporting member 11 except the ring 11-3 can be formed by machining a cylinder made of metal such as stainless steel. The ring 11-3 is preferably formed of a material having flexibility and elasticity (for example, rubber).

The diameter of the first step portion 11-2 of the supporting member 11 is larger than that of the first shaft portion 11-4 and smaller than that of the handle 11-1. A groove is formed on the outer circumferential surface of the first step portion 11-2, and the ring 11-3 is fitted in the groove. The diameter of the second step portion 11-5 of the supporting member 11 is larger than that of the first shaft portion 11-4. Further, the diameter of the second step portion 11-5 is larger than that of the through-hole of the stopper 16. The diameter of the second shaft portion 11-6 is smaller than that of the first shaft portion 11-4. It is preferable that the diameter of the second shaft portion 11-6 is close to the diameter of the through-hole of the stopper 16 and the second shaft portion 11-6 is fitted into the through-hole of the stopper 16. The E-ring 17 is installed on the end portion 11-7 of the supporting member 11. The stopper 16 and the E-ring 17 will be described later.

The connecting member 12 connects the coolant pipe 8 and the nozzle module 20, and the coolant flowing from the coolant pipe 8 flows to the plurality of nozzles through the connecting member 12. The connecting member 12 includes a coolant inlet portion 12-1 and a pipe-type body portion 12-2. For example, the connecting member 12 is made of metal such as stainless steel. The coolant inlet portion 12-1 is connected to an end of the coolant pipe 8. For example, a male screw is formed on the outer circumferential surface of the coolant inlet portion 12-1, a female screw is formed on the inner circumferential surface of the end of the coolant pipe 8, and the coolant inlet portion 12-1 and the coolant pipe 8 are screwed together. A straight portion P having a slightly smaller outer diameter is formed at one end of the body portion 12-2.

The supporting member 11 and the connecting member 12 are connected as described below. The first step portion 11-2 of the supporting member 11 is inserted into the straight portion P formed at the one end of the body portion 12-2 of the connecting member 12. At this time, the ring 11-3 guides the connecting member 12 such that the center of the body portion 12-2 of the connecting member 12 matches the center of the handle 11-1. The outer diameter of the first step portion 11-2 is slightly smaller than the inner diameter of the body portion 12-2, and the outer diameter of the ring 11-3 is slightly larger than the inner diameter of the body portion 12-2. By this, the supporting member 11 is inserted into the connecting member 12 and positioning between them is performed. The ring 11-3 also serves as packing for preventing the coolant from flowing out to the outside. In another embodiment, a step is formed on the inner surface S of the dial-type handle 11-1 of the supporting member 11, and the straight portion P formed at the one end of the body portion 12-2 of the connecting member 12 is provided with packing. The packing is fitted in the step formed in the inner surface S of the dial-type handle 11-1 so as to provide dual packing with the ring 11-3.

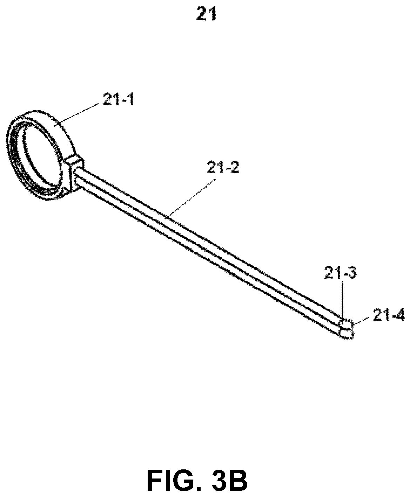

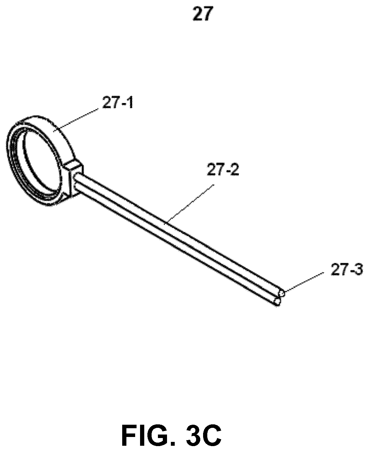

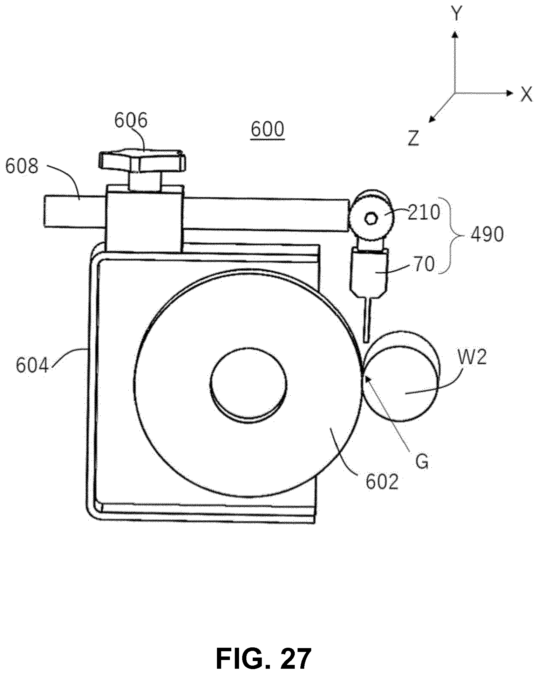

The mesh member 14 guides the plurality of nozzles when the nozzle module 20 is coupled with the base module 10, and is made of, for example, stainless steel. At least a part of the mesh member 14 is formed in the shape of a net in which a plurality of through-holes are formed so that the coolant can flow to the nozzle. In the example shown in Fig. 2A, the mesh member 14 is formed in the shape of a pipe in which the net having the plurality of through-holes is formed in a part of the mesh member 14 and a part of which is open. The inner diameter of the mesh member 14 is larger than the outer diameter of the first shaft portion 11-4 of the supporting member 11. On the other hand, the outer diameter of the mesh member 14 is smaller than the inner diameter of a head portion of the nozzle which will be described later (see 21-1 in Fig. 3B and 27-1 in Fig. 3C) such that the head portion can be put on the mesh member 14. In one example, the size of the outer diameter of the mesh member 14 is determined such that the inner circumferential surface of the head portion of the nozzle is close to the outer circumferential surface of the mesh member 14. In another embodiment, the base module 10 does not include the mesh member 14.

The stopper 16 and the E-ring 17 serve as a stop member for fixing the nozzle module 20 to the base module 10. The stopper 16 is a fixing member for detachably fixing the nozzle module 20 to the base module 10. The second shaft portion 11-6 of the supporting member 11 is inserted into the through-hole formed at the center of the stopper 16 such that the end portion 11-7 of the supporting member 11 is exposed to the outside of the stopper 16, and the E-ring (i.e. an E-shaped snap ring) 17 is engaged with the end portion 11-7 of the supporting member 11. By this, it is possible to fix the stopper 16 and the nozzle module 20 to the supporting member 11. The E-ring 17 has a small contact area with the end portion 11-7 and is easy to engage and release. Each of the stopper 16 and the E-ring 17 may be made of metal such as stainless steel. The diameter of the through-hole of the stopper 16 is smaller than the outer diameter of the second step portion 11-5 of the supporting member 11 so that positioning of the stopper 16 is ensured by the second step portion 11-5 and the coolant can be prevented from flowing to the outside. In this embodiment, the stopper 16 and the E-ring 17 are used as the stop member. In other embodiments, any structure which can fix the nozzle module 20 to the supporting member 11 can be adopted as the stop member of the present invention. For example, a male screw is formed on the outer circumferential surface of the second shaft portion 11-6 of the supporting member 11, and a female screw is formed in the through-hole of the stopper 16 so that the supporting member 11 and the stopper 16 can be engaged by screw-joining. In this case, the end portion 11-7 may not be formed in the supporting member 11, and the base module 10 may not include the E-ring 17.

Between the connecting member 12 and the mesh member 14 (or the nozzle module 20), and between the mesh member 14 (or the nozzle module 20) and the stopper 16, the packing elements 13 and 15 are provided for preventing leakage of the coolant, respectively. For example, the packing elements 13 and 15 are made of rubber. In other embodiments, the supporting member 11 may not include either or both of the packing element 13 and the packing element 15. As shown in Fig. 2B, the supporting member 11 and the stopper 16 are integrally rotatably connected to the connecting member 12.

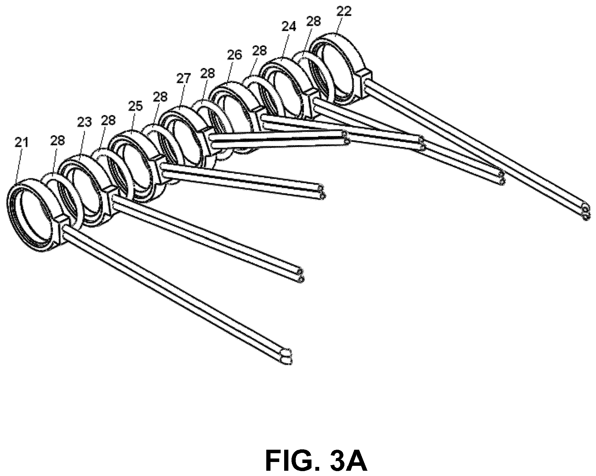

Fig. 3A is an exploded view of the nozzle module 20 of the nozzle assembly 9 according to the first embodiment of the present invention. As shown in Fig. 3A, the nozzle module 20 includes a plurality of nozzles 21 to 27. Packing elements 28 are provided between the nozzles 21 and 23, between the nozzles 23 and 25, between the nozzles 25 and 27, between the nozzles 27 and 26, between the nozzles 26 and 24, and between the nozzles 24 and 22. In the present embodiment, the nozzle module 20 includes seven nozzles, but the number of nozzles is not limited to this example.

The structure of each nozzle will be described with reference to Figs. 3B and 3C. Fig. 3B shows the nozzle 21 which is one of the plurality of nozzles, and Fig. 3C shows the nozzle 27 which is another one of the plurality of nozzles. The nozzle 21 has a head portion 21-1, tube portions 21-2, bent end portions 21-3, and coolant outlets 21-4. The head portion 21-1 has a ring portion for coupling the nozzle 21 to the base module 10 and a neck portion connected to the tube portions 21-2. The head portion 21-1 and one end face of the stopper 16 of the base module 10 fit together with the packing element 15 therebetween. For example, a straight portion formed on the one end face of the stopper 16 is inserted into a recess formed on one surface of the head portion 21-1. The straight portion protrudes from the one end face of the stopper 16 and has a slightly smaller outer diameter than the other part of the stopper 16. In the present embodiment, the head portion of each of the nozzles 22, 24, 26, 27, 25, 23, and 21 is put on the outer circumferential surface of the mesh member 14, and the nozzle module 20 is formed by sequentially fitting them. For example, two adjacent nozzles are connected to each other by fitting a recess formed on a face of the head portion of one of the nozzles and a protrusion formed on an opposite face of the head portion of the other nozzle. At this time, the ring-shaped packing element 28 is disposed between the head portions of the two adjacent nozzles. The size of the packing element 28 is preferably determined such that the packing element 28 enters the recess of the head portion and prevents an outflow of the coolant between the two adjacent nozzles. The head portion of the nozzle 22 and the other end of the connecting member 12 of the base module 10 fit together with the packing element 13 therebetween. For example, a protrusion formed on the head portion of the nozzle 22 is fitted in a recess formed on the other end of the connecting member 12.

The nozzle 27 has a head portion 27-1, tube portions 27-2, and coolant outlets 27-3. The head portion 27-1 of the nozzle 27 has the same structure as that of the head portion 21-1 of the nozzle 21 described above. The tube portion 27-2 is shorter than the tube portion 21-2 of the nozzle 21 and has no bent end portion unlike the nozzle 21. The head portion 27-1 is fitted to the head portion of the nozzle 25 with the packing element 28 therebetween and to the head portion of the nozzle 26 with the packing element 28 therebetween. The structure of each of the nozzles 23 to 26 is similar to that of the nozzle 27 described above. In the present embodiment, each of the nozzles 21 to 27 is arranged in a direction orthogonal to the shaft portions of the supporting member 11 of the base module 10 (i.e. the first shaft portion 11-4 and the second shaft portion 11-6). Each of the nozzles 21 to 27 is individually detachably connectable to the base module 10. The head portion of each of the nozzles 21 to 27 is rotatably connected to the head portion of another adjacent nozzle so that the angle of inclination of each nozzle with respect to the ground can be adjusted. In the present embodiment, each of the nozzles 21 to 27 includes the two tube portions (21-2, ..., and 27-2) connected to the head portion (21-1, ..., and 27-1) (and an end of each of the tube portions is provided with the coolant outlet and optionally the bent end portion). In other embodiments, the number of the tube portion(s) may be one, or three or more. In this case, an appropriate combination of nozzles having different numbers of tube portions may be used. For example, the nozzles at both ends, or, the nozzles at both ends and the center, have a large number of tube portions, while the middle nozzles have a smaller number of tube portions.

The tube portion 21-2 of the nozzle 21 passes through the neck of the head portion 21-1 so that the coolant entering the nozzle assembly 9 through the coolant pipe 8 can flow to the tube portion 21-2. The length of the tube portion 21-2 is determined based on, for example, the structure of the grinding machine 1 and the diameter of the grinding blade 2. As shown in Fig. 3A, in the present embodiment, the nozzles 21 and 22 have a symmetrical relationship with each other. Further, the nozzles 23 and 24 have a symmetrical relationship with each other, and the nozzles 25 and 26 have a symmetrical relationship with each other. A pair of the two nozzles have the tubular portions of equal length and have the same angle of inclination with respect to the ground. The nozzles 21 and 22 disposed on the outermost sides with respect to the grinding blade 2 have bent end portions so that the coolant outlets of the nozzles 21 and 22 face each other. As shown in Fig. 3B, the nozzle 21 includes the bent end portions 21-3 directed toward the nozzle 22, so that the coolant outlets 21-4 face the grinding blade 2. The bending angle of the bent end portions 21-3 is determined based on, for example, the structure of the grinding machine 1 and the thickness of the grinding blade 2. The nozzles 23 and 24 have the tube portions having a shorter length than the nozzles 21 and 22, and have no bent end portions. The nozzles 25 and 26 have the tube portions having a shorter length than the nozzles 23 and 24, and have no bent end portions. The nozzle 27 disposed at the center of the plurality of nozzles has the tube portions having a shorter length than the nozzles 25 and 26, and has no bent end portions (see Fig. 3C). In the present embodiment, it is preferable that the nozzle 27 is arranged to discharge the coolant toward the center in the thickness direction of the grinding blade 2. Only the nozzles 21 and 22 have the bent end portions in the present embodiment, but the present invention is not limited to this embodiment. In another embodiment, at least one of the nozzles 23 to 27 has a bent end portion. In this case, the nozzles 21 and/or 22 may have no bent end portions. In yet another embodiment, none of the nozzles 21 to 27 has a bent end portion. Further, in the present embodiment, the six nozzles of the seven nozzles have a specific relationship in pairs (that is, a symmetrical relationship). In another embodiment, a set of three or more nozzles has a specific relationship. In yet another embodiment, no such relationship exists among the nozzles.

In the following, a method for assembling the nozzle assembly 9 will be described with reference to Figs. 2A and 3A. First, the first step portion 11-2 and the ring 11-3 of the supporting member 11 of the base module 10 are fitted to the one end of the connecting member 12 and they are aligned. Then, the mesh member 14 is positioned at the end of the other end of the connecting member 12 with the packing element 13 therebetween, and the nozzle 22 is put on the mesh member 14 and fitted to the other end of the connecting member 12. For example, the protrusion formed on one end face of the head portion of the nozzle 22 is inserted into the recess formed at the other end of the connecting member 12. Then, the packing element 28, the nozzle 24, the packing element 28, the nozzle 26, the packing element 28, the nozzle 27, the packing element 28, the nozzle 25, the packing element 28, the nozzle 23, the packing element 28, and the nozzle 21 are sequentially put on the mesh member 14 and fit together. And, the stopper 16 is put on the second shaft portion 11-6 of the supporting member 11. At this time, the packing element 15 is disposed between and the mesh member 14 and the stopper 16, and the one end face of the stopper 16 and the head portion of the nozzle 21 fit together with the packing element 15 therebetween. For example, the straight portion formed on the one end face of the stopper 16 is inserted into the recess formed on the one surface of the head portion 21-1. Then, the E-ring 17 is installed on the end portion 11-7 exposed out of the through-hole of the stopper 16. By this, assembly of the nozzle assembly 9 is completed.

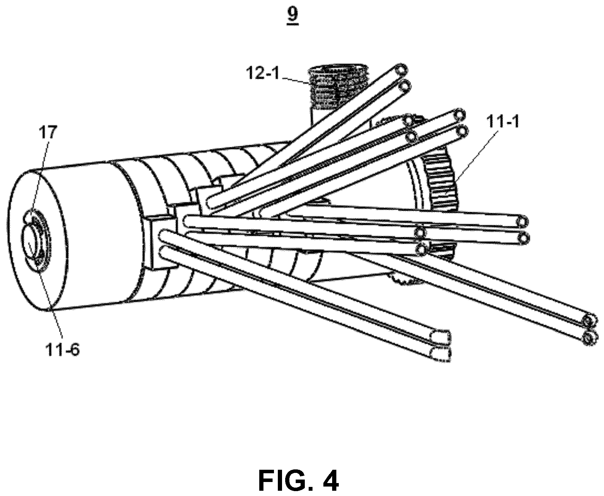

Fig. 4 is a perspective view of the nozzle assembly 9 formed by assembling the components of the base module 10 and the nozzle module 20 as described above. When the coolant inlet portion 12-1 of the nozzle assembly 9 is connected to the end of the coolant pipe 8 (for example, by the screw-joining) and the coolant flows into the coolant pipe 8, the coolant passes through the interior space of the base module 10 and flows into each of the plurality of nozzles 21 to 27. Then, the coolant is discharged toward the grinding blade 2 and the workpiece W1 through the outlets. The operator can adjust the angle of the nozzle module 20 with respect to the ground by manually rotating the dial-type handle 11-1. Further, since each of the plurality of nozzles is rotatable with respect to another nozzle, it is possible to adjust the angle of each nozzle even after connecting the nozzle assembly 9 to the coolant pipe 8. Thus, it is possible to dispose the plurality of nozzles 21 to 27 at optimum positions for discharging the coolant to the grinding blade 2 and the workpiece W1.

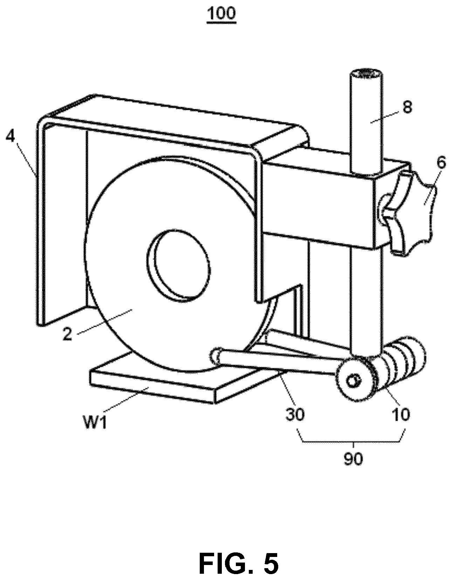

Fig. 5 shows an example of a machine tool including a nozzle assembly according to a second embodiment of the present invention. The machine tool of the present example is a surface grinding machine. A surface grinding machine 100 is provided with a nozzle assembly 90 which includes the base module 10 and a nozzle module 30. Since other components except for the nozzle module 30 are the same as those of the first embodiment, detailed descriptions thereof will be omitted. The nozzle module 30 includes three nozzles.

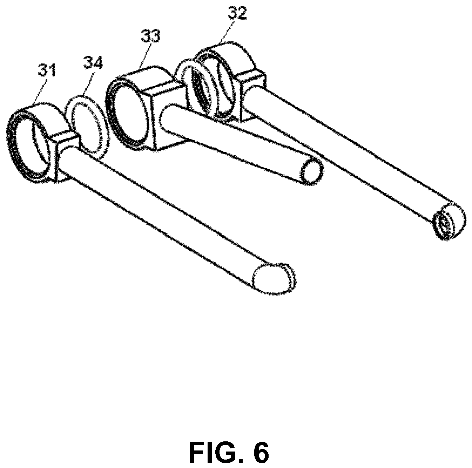

Fig. 6 is an exploded view of the nozzle module 30 of the nozzle assembly 90 according to the second embodiment of the present invention. The nozzle module 30 includes a plurality of nozzles 31 to 33. Between the nozzles 31 and 33 and between the nozzles 33 and 32, packing elements 34 are disposed. The structure of each of the nozzles 31 and 32 is similar to the structure of the nozzle 21 of the first embodiment described with reference to Fig. 3B. More specifically, each of the nozzles 31 and 32 has a head portion, a tube portion, a bent end portion, and a coolant outlet. Further, the bent end portions of the nozzles 31 and 32 are bent in the direction in which the coolant outlets face each other. In the present embodiment, the nozzles 31 and 32 have a symmetrical relationship with each other. The structure of the nozzle 33 is similar to that of the nozzle 27 of the first embodiment described with reference to Fig. 3C. More specifically, the nozzle 33 has a head portion, a tube portion, and a coolant outlet, and the length of the tube portion of the nozzle 33 is shorter than the length of the tube portion of each of the nozzles 31 and 32. It is preferable that the nozzle 33 is arranged to discharge the coolant toward the center of the grinding blade 2 in the thickness direction. The diameter of the tube portion of each of the nozzles 31 to 33 of the present embodiment is larger than the diameter of the tube portion of each of the nozzles of the first embodiment. The nozzles 31 and 32 have the bent end portions in the present embodiment, but the present invention is not limited to this embodiment. Further, the nozzles 31 and 32 form a pair and have a specific relationship (i.e. the symmetrical relationship) in the present embodiment, but the present invention is not limited to this embodiment. In another embodiment, all of the nozzles 31 to 33 have the same length and bent end portions and form one set having a specific positional relationship among them. In yet another embodiment, the nozzles 31 and 32 do not have the symmetrical relationship, and there is no such specific relationship between the nozzles 31 to 33. For example, only one nozzle has a bent end portion, and has no specific relationship with other nozzles.

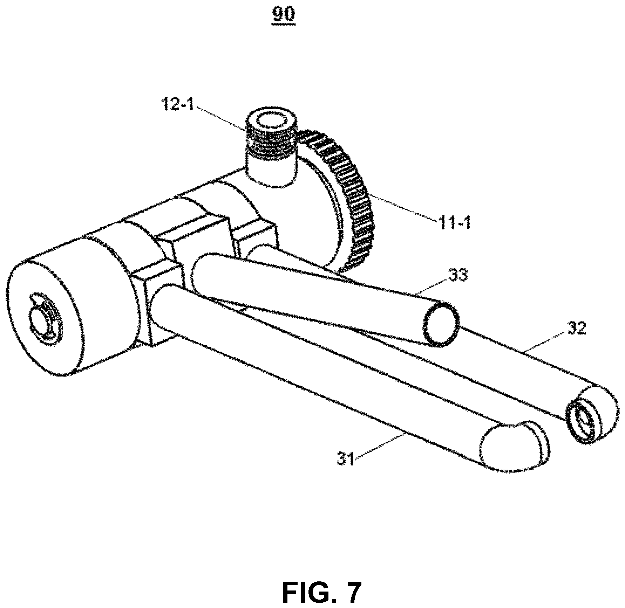

Fig. 7 is a perspective view of the nozzle assembly 90 according to the second embodiment of the present invention. In the following, a method of assembling the nozzle assembly 90 will be described with reference to Figs. 6 and 7. First, the first step portion 11-2 of the supporting member 11 of the base module 10 is fitted to one end of the body portion 12-2 of the connecting member 12. The mesh member 14 is positioned at the other end of the body portion 12-2 of the connecting member 12 with the packing 13 therebetween, and the nozzle 32 is put on the mesh member 14 and fitted to the connecting member 12. Then, the packing element 34, the nozzle 33, the packing element 34, and the nozzle 31 are sequentially put on the mesh member 14 and fit together. And, the stopper 16 is put on the second shaft portion 11-6 of the supporting member 11 and fitted to the nozzle 31 with the packing 15 therebetween. Then, the E-ring 17 is installed on the end portion 11-7 exposed out of the through-hole of the stopper 16. By this, assembly of the nozzle assembly 90 is completed. In the present embodiment, each of the nozzles 31 to 33 is arranged in a direction orthogonal to the shaft portions of the supporting member 11 of the base module 10 (i.e. the first shaft portion 11-4 and the second shaft portion 11-6). In addition, each of the nozzles 31 to 33 is individually detachably connectable to the base module 10.

When the coolant inlet portion 12-1 of the nozzle assembly 90 is connected to the end of the coolant pipe 8 (for example, by the screw-joining) and the coolant flows into the coolant pipe 8, the coolant passes through the interior space of the base module 10 and flows into each of the plurality of nozzles 31 to 33. Then, the coolant is discharged toward the grinding blade 2 and the workpiece W1 through the outlet of each nozzle. The angle of the nozzle module 30 with respect to the ground can be adjusted by manually rotating the dial-type handle 11-1. Further, since each of the plurality of nozzles is rotatable with respect to another nozzle, it is possible to adjust the angle of each nozzle even after connecting the nozzle assembly 90 to the coolant pipe 8. Thus, it is possible to dispose the plurality of nozzles 31 to 33 at the optimum positions for discharging the coolant to the grinding blade 2 and the workpiece W1.

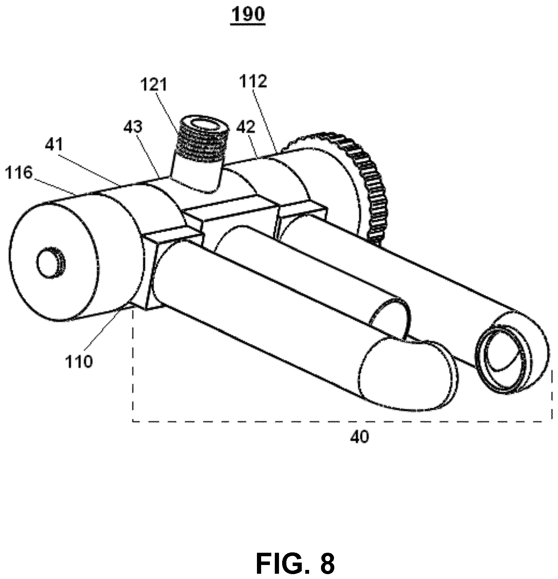

Fig. 8 is a perspective view of a nozzle assembly according to a third embodiment of the present invention. A nozzle assembly 190 according to the third embodiment includes a base module 110 and a nozzle module 40. The nozzle module 40 includes three nozzles 41, 42 and 43. In the present embodiment, each of the nozzles 41 to 43 is arranged in a direction orthogonal to a shaft portion of a supporting member of the base module 110. Further, each of the nozzles 41 to 43 is individually detachably connectable to the base module 110. With regard to the nozzle assembly 190 of the third embodiment, descriptions of the same parts as those of the nozzle assembly 90 of the second embodiment will be omitted, and only differences will be described. The base module 110 is similar to the base module 10 shown in Fig. 2A except that a connecting member 112 of the base module 110 does not have the coolant inlet portion 12-1 unlike the connecting member 12 of the first embodiment and the base module 110 does not include the E-ring 17. In the third embodiment, a coolant inlet portion 121 is formed in the nozzle 43, which is one of the plurality of nozzles included in the nozzle module 40 of the nozzle assembly 190. The nozzles 41 and 42 of the nozzle module 40 have the same structure as the nozzles 31 and 32 of the second embodiment, respectively. More specifically, each of the nozzles 41 and 42 has a head portion, a tube portion, a bent end portion, and a coolant outlet, and the coolant outlet of the nozzle 41 and the coolant outlet of the nozzle 42 face each other. The nozzle 43 has a head portion, a tube portion, and a coolant outlet similarly to the nozzle 33, but is different from the nozzle 33 in that the head portion of the nozzle 43 has the coolant inlet portion 121.

More specifically, the coolant inlet portion 12-1 to be connected to the coolant pipe 8 is formed in the connecting member 12 of the base module 10 of the nozzle assembly 90 according to the second embodiment, while the coolant inlet portion 121 is formed in the nozzle 43 which is one of the plurality of nozzles of the nozzle assembly 190 according to the third embodiment. The coolant inlet portion 121 is connected to one end of the coolant pipe 8. For example, a male screw is formed on the outer circumferential surface of the coolant inflow portion 121, and a female screw is formed on the inner circumferential surface of the one end of the coolant pipe 8 so that the coolant inlet portion 121 and the coolant pipe 8 are screwed together. When the coolant inlet portion 121 of the nozzle assembly 190 is connected to the one end of the coolant pipe 8 (for example, by the screw-joining) and the coolant flows into the coolant pipe 8, the coolant flows to each nozzle through the interior space of the nozzle module 40. Then, the coolant is discharged toward the grinding blade 2 and the workpiece W1 through the outlet of each of the nozzles.

In the present embodiment, the base module 110 does not include the E-ring 17, and instead, a stopper 116 is screwed with the second shaft portion 11-6 of the supporting member 11. Similarly to the nozzle assembly 90, the stopper 116 may also be fixed to the supporting member 11 by the E-ring 17. Further, as described with respect to Fig. 2A, in other embodiments, the base module 110 may not include the mesh member 14. In the present embodiment, the coolant inlet portion 121 is formed only in the nozzle 43. In other embodiments, the coolant inlet portion is formed in the nozzle 41 or 42. In yet another embodiment, coolant inlet portions are formed in two or three of the three nozzles 41 to 43. In addition, the nozzles 41 and 42 have the bent end portions in this embodiment, but the present invention is not limited to this embodiment. In the present embodiment, the nozzles 41 and 42 forms a pair having a specific relationship (i.e., a symmetrical relationship). However, the present invention is not limited to this embodiment. As described above, in another embodiment, the nozzles 41 to 43 form one set having a specific positional relationship among them. In yet another embodiment, there exists no such particular relationship among the nozzles 41 to 43.

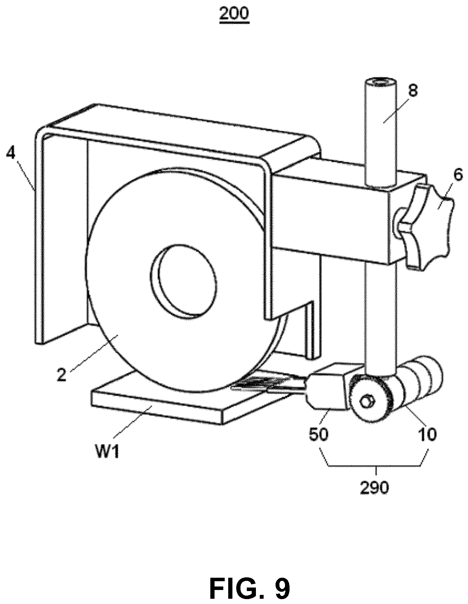

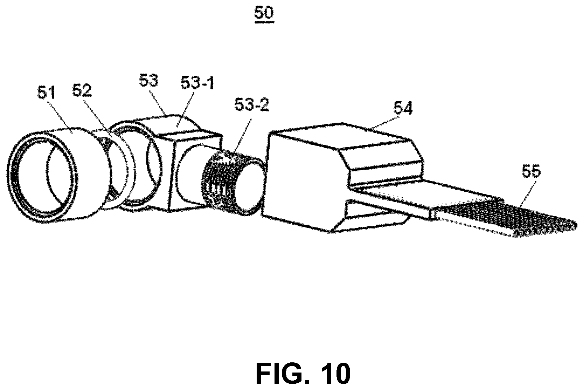

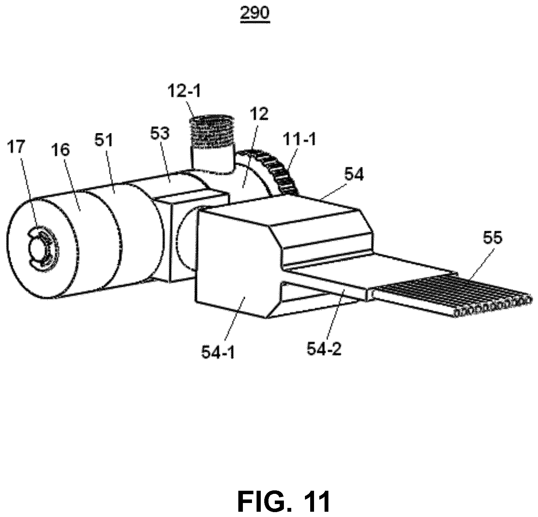

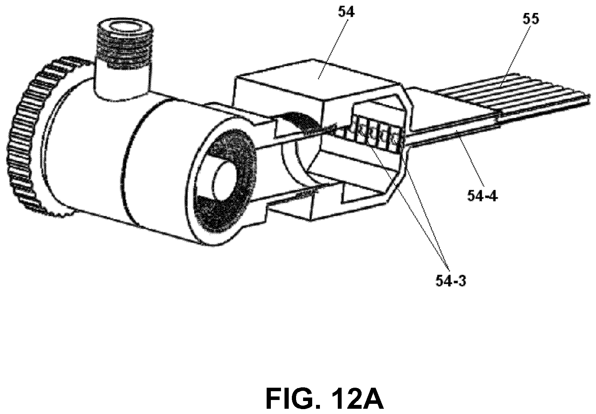

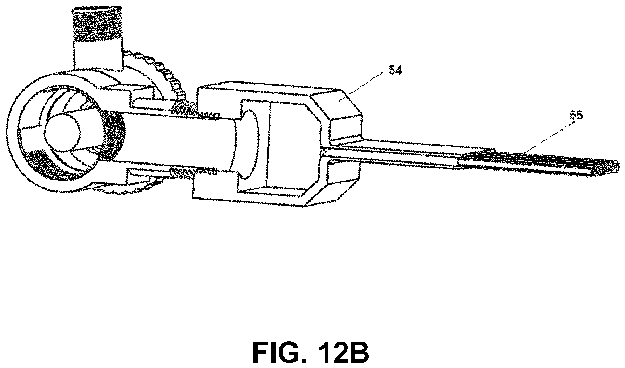

Fig. 9 shows an example of a machine tool including a nozzle assembly according to a fourth embodiment of the present invention. The machine tool of the present example is a surface grinding machine 200. The surface grinding machine 200 is provided with a nozzle assembly 290 which includes the base module 10 and a nozzle module 50. Fig. 10 is an exploded view of the nozzle module 50 of the nozzle assembly 290 according to the present embodiment. Fig. 11 is a perspective view of the nozzle assembly 290 according to the present embodiment. Figs. 12A and 12B are cross-sectional views of the nozzle assembly 290 of Fig. 11 viewed from different angles. Other components of the nozzle assembly 290 except for the nozzle module 50 are the same as those of the first embodiment, and detailed descriptions thereof will be omitted.

As shown in Fig. 10, the nozzle module 50 includes a straight pipe 51, a packing element 52, an elbow pipe 53, a supporting member 54, and multi-nozzles 55. With reference to Fig. 2A together with Fig. 10, it can be understood that the straight pipe 51 is disposed between the elbow pipe 53 of the nozzle module 50 and the stopper 16 of the base module 10. One end of the straight pipe 51 and one end face of the stopper 16 fit together with the packing element 15 therebetween. For example, a straight portion formed on the one end face of the stopper 16 is inserted into a recess formed on the one end face of the straight pipe 51. The width of the straight pipe 51 (i.e. the length of the straight pipe 51 along the first shaft portion 11-4 of the supporting member 11) is determined based on the length of the first shaft portion 11-4 of the supporting member 11 and the width of the elbow pipe 53 which will be described later. More specifically, the width of the straight pipe 51 is determined as {the length of the first shaft portion 11-4 - (the width of the elbow pipe 53 + the width of the connecting member 12)}.

The elbow pipe 53 includes a head portion 53-1 and a connection pipe 53-2, and is, for example, a T-shaped pipe. The head portion 53-1 has a ring portion for coupling the multi-nozzles 55 to the base module 10 and a neck portion connected to the connection pipe 53-2. The head portion 53-1 has one end face fitted to the other end face of the straight pipe 51 with the packing element 52 therebetween and the other end face fitted to one end face of the connecting member 12 of the base module 10 with the packing element 13 therebetween. For example, a straight portion formed on the other end face of the straight pipe 51 is inserted into a recess formed on the one end face of the head portion 53-1, and a protrusion formed on the other end face of the head portion 53-1 is inserted into a recess formed on the end face of the connecting member 12 of the base module 10. The connection pipe 53-2 passes through the neck portion of the head portion 53-1 so that the coolant entering the nozzle assembly 290 through the coolant pipe 8 can flow into the connection pipe 53-2. In the present embodiment, the straight pipe 51 and the elbow pipe 53 are manufactured as separate parts. In other embodiments, the straight pipe 51 and the elbow pipe 53 are integrally formed, i.e. as a single part.

The supporting member 54 consists of a body portion 54-1 and an extension portion 54-2 as shown in Fig. 11. As shown in Figs. 12A and 12B, which are cross-sectional views of the nozzle assembly 290 of the present embodiment, cavities are formed in the body portion 54-1 and the extension portion 54-2 to allow the coolant to flow to the multi-nozzles 55. For example, a male screw is formed on the outer circumferential surface of the connection pipe 53-2 of the elbow pipe 53 (see Fig. 10), a female screw is formed inside the body portion 54-1 of the supporting member 54 (see Fig. 12B), and the elbow pipe 53 and the supporting member 54 are connected by screw-joining. Since a path through which the coolant flows is sharply narrowed between the body portion 54-1 and the extension portion 54-2 of the supporting member 54 as shown in Fig. 12A, the coolant is discharged from the multi-nozzles 55 at a high pressure. A plurality of flow paths 54-4 are formed in the interior space of the extension portion 54-2, and an inlet 54-3 of each of the flow paths 54-4 is formed at a connecting portion of the body portion 54-1 and the extension portion 54-2 of the supporting member 54. As shown in Figs. 12A and 12B, the inlet 54-3 has a guide portion formed to guide a fluid (for example, a protrusion, a recess, or a combination of thereof). The guide portion guides the coolant to each of the flow paths 54-4, thereby improving the discharge effect of the coolant. More specifically, a part or all of the plurality of inlets 54-3 may individually have the guide portion protruding from the surface of the connecting portion of the body portion 54-1 and the extension portion 54-2 toward the body portion 54-1. Alternately, a part or all of the plurality of inlets 54-3 may individually have the guide portion which is an edge of a recess formed in the surface of the connecting portion of the body portion 54-1 and the extension portion 54-2. The multi-nozzles 55 include a plurality of nozzles (or, a plurality of pipes), and each of the plurality of nozzles is inserted into each of the plurality of flow paths 54-4 formed inside the extension portion 54-2 of the supporting member 54 in parallel in a direction orthogonal to the shaft portions of the supporting member 11 (i.e. the first shaft portion 11-4 and the second shaft portion 11-6). Thus, the coolant entering the interior space of the supporting member 54 can flow into the plurality of nozzles. Each of the plurality of nozzles is detachably connectable to the supporting member 54 of the nozzle module 50. Each of the plurality of nozzles may be inserted such that its inlet-side end reaches the coolant inlet 54-3 of the supporting member 54, or reaches a predetermined position in the flow path 54-4. Further, the extension portion 54-2 of the supporting member 54 serves to support the multi-nozzles 55 so that the coolant can be discharged at a high pressure. By the multi-nozzles 55, the distance from the outlet of the nozzle module 50 to the grinding blade 2 or the workpiece W1 can be adjusted to be an optimum distance by adjusting the length of each nozzle to effectively alleviate or eliminate the heat generated during grinding. It is preferable that the plurality of nozzles are held so as to individually move in and out of the flow paths 54-4. In other words, each of the plurality of nozzles is inserted from the end of each of the plurality of flow paths 54-4 of the extension portion 54-2 and held such that it can move in and out of the flow path 54-4, thereby changing the length from the end of the flow path 54-4 to the outlet of the nozzle. The elbow pipe 53 and the supporting member 54 are collectively referred to as a nozzle holding member. In the present embodiment, nozzles of various numbers, types, or sizes can be easily detachably connected to the nozzle module 50 according to the kind of the grinding machine, the size of the grinding blade, or the like, by manufacturing the elbow pipe 53 and the supporting member 54 as separate parts. In other embodiments, the elbow pipe 53 and the supporting member 54 are manufactured as a single part. In this case, the multi-nozzles can be replaced by replacing the one part.

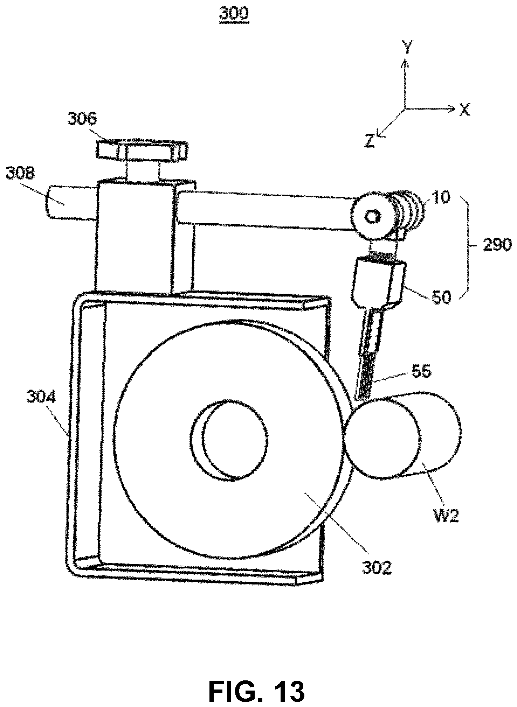

Fig. 13 shows another example of a machine tool including the nozzle assembly 290 of the fourth embodiment of the present invention. The machine tool of the present example is a cylindrical grinding machine. A cylindrical grinding machine 300 includes a grinding blade 302, a protection cover 304, a position adjusting unit 306, a coolant pipe 308, and a nozzle assembly 290. As described above, the nozzle assembly 290 includes the base module 10 and the nozzle module 50, and the nozzle module 50 includes the multi-nozzles 55. Although not shown in Fig. 13, the cylindrical grinding machine 300 may include a transfer device which rotates a workpiece W2 by supporting it at the center of its both end faces and moves it along the central axis (i.e., in the Z-axis direction). The grinding blade 302 is rotationally driven in the clockwise direction in the plane of Fig. 13 by the driving source (not shown in the drawing). A surface of the workpiece W2 is ground by friction between the outer circumferential surface of the grinding blade 302 and the surface of the workpiece W2 contacting the grinding blade 302. The protection cover 304 surrounds the grinding blade 302 rotating at a high speed and protects workers around the grinding machine by preventing chips of the workpiece W2 from scattering during grinding.

The position adjusting unit 306 is provided on the protection cover 304, and fixes the coolant pipe 308 movable in the X-axis direction at a desired position. By this, the nozzle assembly 290 connected to the coolant pipe 308 is disposed at a proper position with respect to the workpiece W2 and the grinding blade 302. The nozzle assembly 290 is connected to one end of the coolant pipe 308, and a tank in which the coolant is stored (not shown in the drawing) is connected to the other end of the coolant pipe 308. The base module 10 connects the nozzle module 50 and the coolant pipe 308 to allow the coolant to flow into the nozzle module 50 through the coolant pipe 308. Further, the base module 10 fixes the multi-nozzles of the nozzle module 50 at a proper position. In addition, the nozzle assembly 9, 90, or 190, or a nozzle assembly 390, which will be described later, can be applied to the cylindrical grinding machine 300.

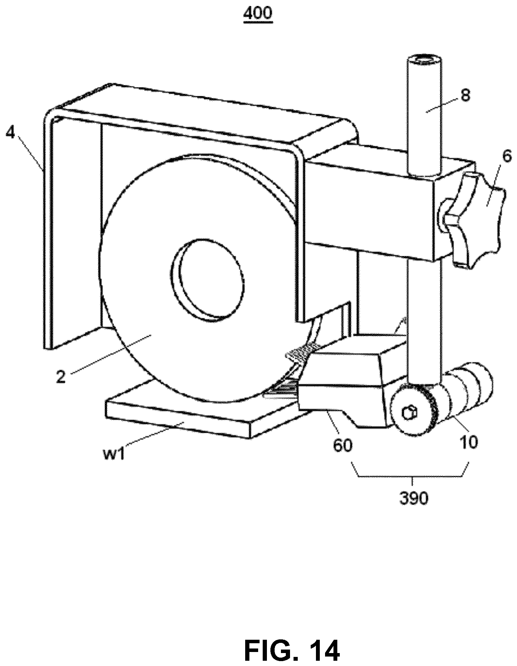

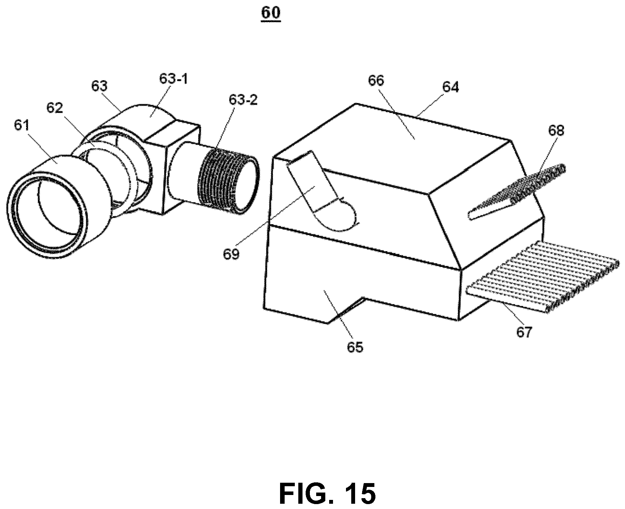

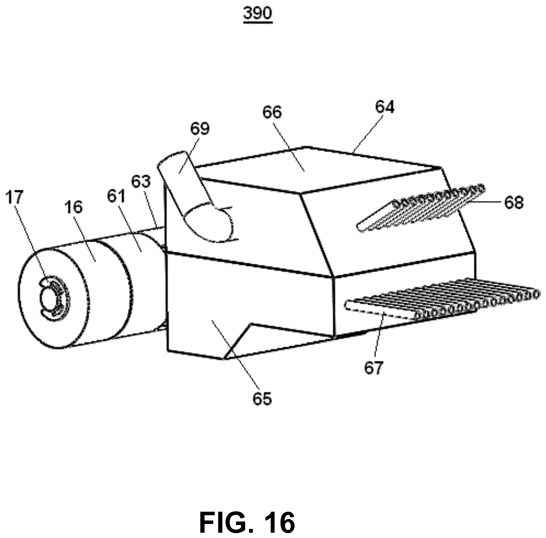

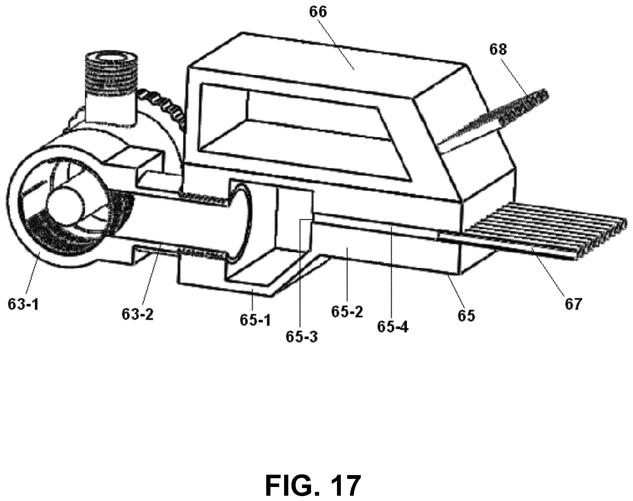

Fig. 14 shows an example of a machine tool including a nozzle assembly according to a fifth embodiment of the present invention. The machine tool of the present example is a surface grinding machine 400. The surface grinding machine 400 is provided with a nozzle assembly 390 which includes the base module 10 and a nozzle module 60. Fig. 15 is an exploded view of the nozzle module 60 of the nozzle assembly 390 according to the present embodiment. Fig. 16 is a perspective view of the nozzle assembly 390 according to the present embodiment. Fig. 17 is a cross-sectional view of the nozzle assembly 390 of Fig. 16. Since other components except for the nozzle module 60 are the same as those of the first embodiment, detailed descriptions thereof will be omitted.

As shown in Fig. 15, the nozzle module 60 has a two-level (upper-level and lower-level) structure for discharging the coolant and air. More specifically, the nozzle module 60 includes a straight pipe 61, a packing element 62, an elbow pipe 63, a supporting member 64, multi-nozzles 67, an air nozzle 68, and an air inlet 69. Referring to Fig. 2A together with Fig. 15, the straight pipe 61 is disposed between the elbow pipe 63 of the nozzle module 60 and the stopper 16 of the base module 10. An end of the straight pipe 61 is fitted to one end face of the stopper 16 with the packing element 15 therebetween. For example, a straight portion formed on the one end face of the stopper 16 is inserted into a recess formed on the one end face of the straight pipe 61. The width of the straight pipe 61 is determined based on the length of the first shaft portion 11-4 of the supporting member 11 and the width of the elbow pipe 63 which will be described later. More specifically, the width of the straight pipe 61 is determined as {the length of the first shaft portion 11-4 - (the width of the elbow pipe 63 + the width of the connecting member 12)}.

The elbow pipe 63 includes a head portion 63-1 and a connection pipe 63-2, and is, for example, a T-shaped pipe. The head portion 63-1 has a ring portion for coupling the elbow pipe 63 to the base module 10 and a neck portion connected to the connection pipe 63-2. The head portion 63-1 has one end face fitted to the other end face of the straight pipe 61 with the packing element 62 therebetween and the other end face fitted to one end face of the connecting member 12 of the base module 10 with the packing element 13 therebetween. For example, a straight portion formed on the other end face of the straight pipe 61 is inserted into a recess formed on the one end face of the head portion 63-1, and a straight portion formed on the other end face of the head portion 63-1 is inserted into a recess formed on the end face of the connecting member 12 of the base module 10. The connection pipe 63-2 passes through the neck portion of the head portion 63-1 so that the coolant entering the nozzle assembly 390 through the coolant pipe 8 can flow into the connection pipe 63-2. In the present embodiment, the straight pipe 61 and the elbow pipe 63 are manufactured as separate parts. In other embodiments, the straight pipe 61 and the elbow pipe 63 are integrally formed, i.e. as a single part.

The supporting member 64 consists of a first section 65 (the lower part of the supporting member 64 in Fig. 15) for discharging the coolant and a second section 66 (the upper part of the supporting member 64 in Fig. 15) for discharging the air. As shown in Fig. 17, which is a cross-sectional view of the nozzle assembly 390 of the present embodiment, the first section 65 of the supporting member 64 includes a body portion 65-1 having an interior cavity so that the coolant can flow to the multi-nozzles 67 and an extension portion 65-2. For example, a male screw is formed on the outer circumferential surface of the connection pipe 63-2 of the elbow pipe 63 (see Fig. 15), a female screw is formed inside the body portion 65-1 of the first section 65 of the supporting member 64 (see Fig. 17), and the elbow pipe 63 and the supporting member 64 are screwed together. Since a path through which the coolant flows sharply narrows between the body portion 65-1 and the extension portion 65-2 of the first section 65 of the supporting member 64 as shown in Fig. 17, the coolant is discharged from the multi-nozzles 67 at a high pressure. A plurality of flow paths 65-4 are formed in the interior space of the extension portion 65-2 and an inlet 65-3 of each of the plurality of flow paths 65-4 (with or without a guide portion for guiding the coolant) is formed at a connecting portion of the body portion 65-1 and the extension portion 65-2 of the first section 65 of the supporting member 64. The multi-nozzles 67 include a plurality of nozzles, and each of the plurality of nozzles is inserted into each of the plurality of flow paths 65-4 formed inside the extension portion 65-2 in parallel in a direction orthogonal to the shaft portions of the supporting member 11 (i.e. the first shaft portion 11-4 and the second shaft portion 11-6). Thus, the coolant entering the interior space of the first section 65 of the supporting member 64 can flow into the plurality of nozzles. Each of the plurality of nozzles is detachably connected to the supporting member 64 of the nozzle module 60. Each of the plurality of nozzles may be inserted such that its inlet-side end reaches the coolant inlet 65-3 of the first section 65 of the supporting member 64, or reaches a predetermined position in the flow path 65-4. Further, the extension portion 65-2 of the first section 65 of the supporting member 64 serves to support the multi-nozzles 67 so that the coolant can be discharged at a high pressure. In the present embodiment, nozzles of various numbers, types, or sizes can be easily detachably connected to the nozzle module 60 according to the kind of the grinding machine, the size of the grinding blade, or the like, by manufacturing the elbow pipe 63 and the supporting member 64 as separate parts. In other embodiments, the elbow pipe 63 and the supporting member 64 are manufactured as a single part. In this case, the multi-nozzles can be replaced by replacing the one part.

The second section 66 of the supporting member 64 includes an air nozzle 68 and an air inlet 69. In the second section 66, compressed air is supplied from the air inlet 69 and is further compressed from a hollow interior space of the second section 66 to a narrow path of the air nozzle 68 such that the compressed air is discharged at a high pressure. It is also possible to provide an additional air discharge mechanism inside the second section 66. In the present embodiment, the air nozzle 68 includes a plurality of nozzles. In conventional grinding machines, the coolant cannot sufficiently reach the contact portion between the grinding blade and the workpiece due to an air layer rotating together the grinding blade along the outer circumferential surface of the grinding blade rotating at a high speed. In order to solve this problem, in the present embodiment, the air nozzle 68 for discharging the air at a high speed is disposed upstream of the multi-nozzles 67 for discharging the coolant. The air discharged from the air nozzle 68 blocks the air rotating along the outer circumferential surface of the grinding blade so that the coolant discharged from the multi-nozzles 67 disposed downstream can sufficiently reach the grinding blade 2 and the workpiece W1.

In the fourth and fifth embodiments, the multi-nozzles (55, 67) are inserted into the plurality of flow paths (54-4, 65-4) formed in the supporting members (54, 64). In a sixth embodiment, the coolant is directly discharged from a plurality of outlets of the plurality of flow paths formed in the supporting member (54, 64). Thus, the plurality of flow paths (54-4, 65-4) are used as nozzles without using the multi-nozzles (55, 67). In this case, the plurality of flow paths (54-4, 65-4) are arranged in parallel in a direction orthogonal to the shaft portions of the supporting member 11 (i.e. the first shaft portion 11-4 and the second shaft portion 11-6). According to the sixth embodiment (not shown in the drawings), it is possible to reduce the manufacturing cost of the nozzle assembly by reducing the number of parts, and the type or number of nozzles can be easily changed by replacing the supporting member (54, 64). As described above, the inlets (54-3, 65-3) may have the guide portion (for example, the protrusion, the recess, or a combination thereof) for guiding the coolant. The guide portion guides the coolant to each of the flow paths, thereby improving the discharge effect of the coolant. In addition, the operator can adjust the angle of the nozzle module with respect to the ground by manually rotating the dial-type handle 11-1 of the base module 10. By this, it is possible to dispose the plurality of nozzles at the optimum positions for discharging the coolant to the grinding blade and the workpiece.

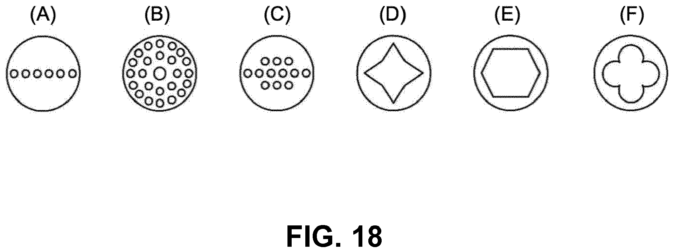

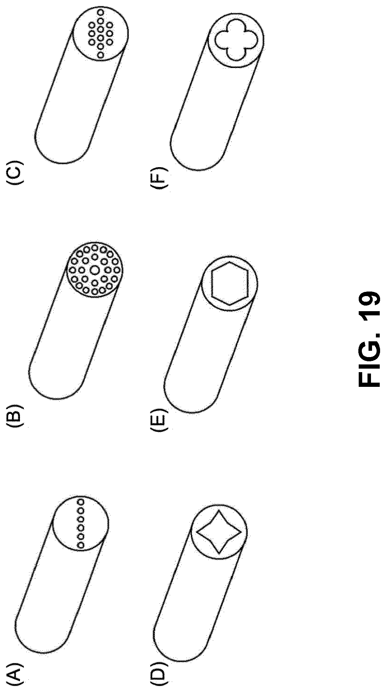

Fig. 18 shows cross-sectional views of a tube portion of a nozzle applicable to the present invention. In the embodiments described above, the tube portion of the nozzle (for example, the nozzle 27 according to the first embodiment shown in Fig. 3C, the nozzle 33 according to the second embodiment shown in Fig. 6, the nozzle 43 according to the third embodiment shown in Fig. 8, each nozzle of the multi-nozzles 55 according to the fourth embodiment shown in Fig. 10, the nozzle 67 according to the fifth embodiment shown in Fig. 15, or each of the flow paths according to the sixth embodiment) is formed in the shape of a circular pipe with one circular outlet. Generally, the shape of the cross-section of the tube portion is the same as the shape of the end at which the outlet is formed. The shape of the tube portion of the nozzle or the flow path is not limited to the circular pipe as described above, and the tube portion or the flow path may have one of various cross-sectional shapes as shown in (A) to (F) of Fig. 18. Each of (A) to (F) of Fig. 19 is a perspective view of the tube portion of the nozzle or the flow path corresponding to each of the cross-sectional views shown in (A) to (F) of Fig. 18. In the case that the coolant is discharged through the tube portion having a cross-section in which a plurality of small holes arranged in a predetermined manner, a star-shaped hole, a polygonal hole, or a flower-shaped hole are/is formed as shown in Fig. 18, it is possible to increase the discharge pressure or suppress dispersion of the coolant as compared with the tube portion having one circular outlet. Each of the plurality of small holes is, for example, a circular hole, a star-shaped hole, a polygonal hole, or a flower-shaped hole. In particular, by using a nozzle having a star-shaped outlet as shown in (D) of Fig. 18, it is possible to prevent the dispersion of the coolant in a direction different from the direction in which the coolant is discharged and increase the discharge pressure. The star-shaped hole is not limited to (D) in Fig. 18, and may have five or more vertices. The polygonal hole is not limited to the hexagon shown in (E) of Fig. 18, and may be a polygon with five (5) vertices (i.e. a pentagon) or more vertices. The cross-section of the nozzle or the flow path (i.e. the outlet) may have a shape other than those described above. The flower-shaped hole shown in (F) of Fig. 18 can prevent the dispersion of the coolant in a direction different from the direction in which the coolant is discharged, and reduce fluid pressure loss of the coolant. The number of petals of the flower is not limited to four, but may be two or more (an even number or an odd number). In the case that the number is an even number, the flower may have 6 or 8 petals.

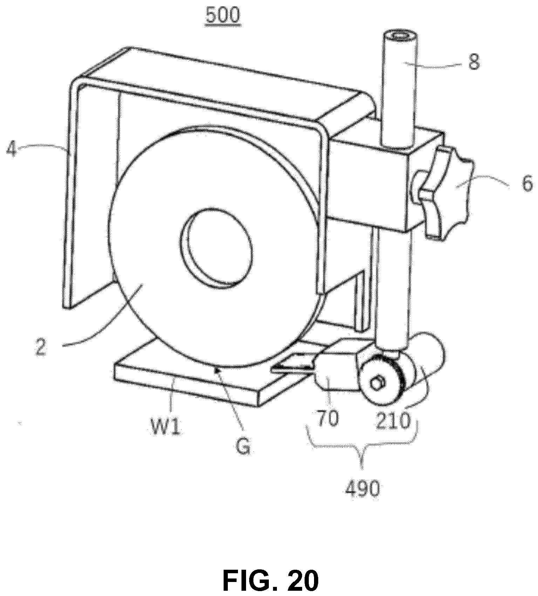

Fig. 20 shows an example of a machine tool including a nozzle assembly according to a seventh embodiment of the present invention. The machine tool of the present example is a surface grinding machine 500. The surface grinding machine 500 is provided with a nozzle assembly 490 which includes a base module 210 and a nozzle module 70. The base module 210 is the nozzle fixing structure for fixing the nozzle module 70 to the coolant pipe 8 and connects the nozzle module 70 and the coolant pipe 8 to allow the coolant (for example, water or oil) to flow into the nozzle module 70 through the coolant pipe 8. Further, the base module 210 fixes a fluid discharge portion 70-2 including a plurality of flow paths 70-4 of the nozzle module 70, which will be described later, at a suitable position. Since other components of the surface grinding machine 500 except for the nozzle assembly 490 are the same as those of the first embodiment, detailed descriptions thereof will be omitted.

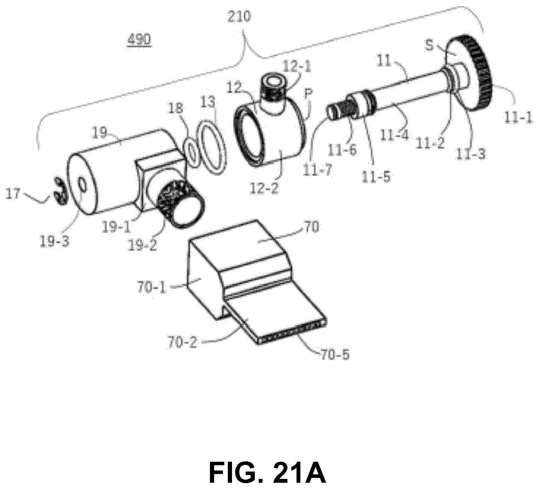

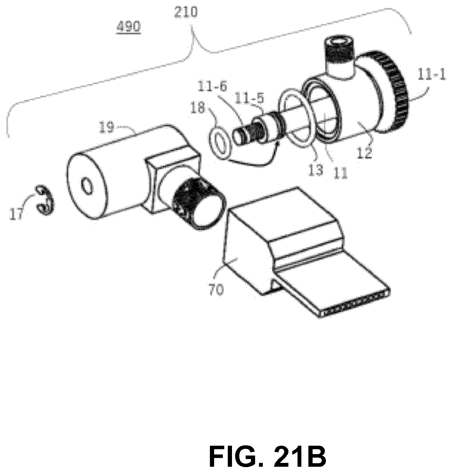

Fig. 21A is an exploded view of the nozzle assembly 490 according to the seventh embodiment of the present invention. Fig. 21B shows a state in which components of the nozzle assembly 490 shown in Fig. 21A are being assembled. The base module 210 includes the supporting member 11, the connecting member 12, the packing element 13, a small packing element 18, a fixing member 19 which also functions as a stopper, and the E-ring 17. The supporting member 11 includes the dial-type handle 11-1 which can be rotated by the operator, the first step portion 11-2 and the ring 11-3 for guiding the connecting member 12 to be in position, the first shaft portion 11-4 penetrating the center of the base module 210, the second step portion 11-5 for fixing the fixing member 19 at a predetermined position in the axial direction and preventing the coolant from flowing out to the outside, the second shaft portion 11-6 which is inserted into a through-hole 19-3 formed in the fixing member 19, and the end portion 11-7 which is exposed out of the through-hole 19-3 of the fixing member 19. The components of the supporting member 11 except for the ring 11-3 can be formed by machining a cylinder made of metal such as stainless steel. The ring 11-3 is preferably formed of a material having flexibility and elasticity (for example, rubber).

The diameter of the first step portion 11-2 of the supporting member 11 is larger than that of the first shaft portion 11-4 and smaller than that of the handle 11-1. The groove is formed on the outer circumferential surface of the first step portion 11-2, and the ring 11-3 is fitted in the groove. The diameter of the second step portion 11-5 of the supporting member 11 is larger than that of the first shaft portion 11-4. The diameter of the second step portion 11-5 is larger than that of the through-hole 19-3 of the fixing member 19. The diameter of the second shaft portion 11-6 is smaller than that of the first shaft portion 11-4. It is preferable that the diameter of the second shaft portion 11-6 is close to the diameter of the through-hole 19-3 of the fixing member 19 and the second shaft portion 11-6 is fitted in the fixing member 19. The E-ring 17 is installed on the end portion 11-7 of the supporting member 11. The fixing member 19 and the E-ring 17 will be described later.

The connecting member 12 is connected to the coolant pipe 8, and the coolant flowing from the coolant pipe 8 flows to the nozzle module 70 via the fixing member 19. The configuration of the connecting member 12 and the method for connecting the supporting member 11 and the connecting member 12 are the same as those described with respect to the first embodiment, and descriptions thereof will be omitted. The fixing member 19 and the E-ring 17 serve as the stop member for fixing the assembled base module 210. The second shaft portion 11-6 of the supporting member 11 is inserted into the through-hole 19-3 formed at the center of the fixing member 19 such that the end portion 11-7 of the supporting member 11 is exposed out of the fixing member 19, and the E-ring (i.e. the E-shaped snap ring) 17 is installed on the end portion 11-7 of the supporting member 11. By this, the fixing member 19 and the nozzle module 70 are fixed to the supporting member 11. The E-ring 17 has a small contact area with the shaft and is easy to engage and release. For example, each of the fixing member 19 and the E-ring 17 is made of metal (for example, stainless steel). The diameter of the through-hole 19-3 of the fixing member 19 is smaller than the outer diameter of the second step portion 11-5 of the supporting member 11 so that positioning of the fixing member 19 is possible by the second step portion 11-5 and the coolant can be prevented from flowing out. In addition, a male screw may be formed on the outer circumferential surface of the second shaft portion 11-6 of the supporting member 11 and a female screw may be formed in an end portion of the through-hole 19-3 of the fixing member 19. Thus, the second shaft portion 11-6 is screwed into the screw hole formed in the end portion of the through-hole 19-3 of the fixing member 19, so that the supporting member 11 and the fixing member 19 may be further fixed to each other. In another embodiment, the supporting member 11 and the fixing member 19 are connected by the screw joining described above, and the base module 210 does not include the E-ring. In this case, the supporting member 11 may not include the end portion 11-7.

Between the connecting member 12 and the fixing member 19, the packing element 13 and the small packing element 18 for preventing leakage of the coolant are provided. For example, the packing elements 13 and 18 are made of rubber. The packing element 13 is located at one end of the connecting member 12 and the packing element 18 is located at the end face of the second step portion 11-5 of the supporting member 11 (the end face is indicated by an arrow in Fig. 21B). According to embodiments, the base module 210 does not include one or both of the packing elements 13 and 18. As shown in Fig. 21B, when the components are assembled, the supporting member 11 and the fixing member 19 are integrally rotatably connected to the connecting member 12.

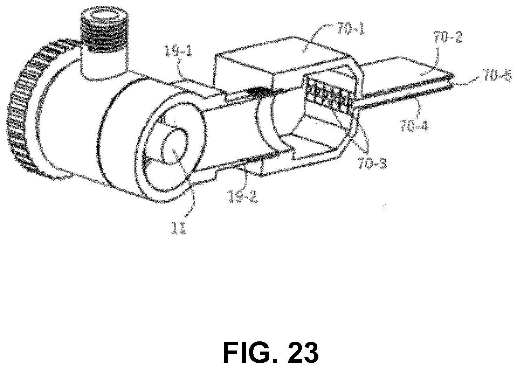

The fixing member 19 includes a head portion 19-1 and a connection pipe 19-2. A male screw is formed on the outer circumferential surface of the connection pipe 19-2 and a female screw is formed in a body portion 70-1 of the nozzle module 70 (see Fig. 23). Thus, the connection pipe 19-2 of the fixing member 19 and the body portion 70-1 of the nozzle module 70 are connected by screw joining. The connection pipe 19-2 passes through a neck of the head portion 19-1 so that the coolant entering the nozzle assembly 490 through the coolant pipe 8 can flow to the connection pipe 19-2. The connection between the fixing member 19 and the body portion 70-1 of the nozzle module 70 is not limited to the screw-joining, but may be achieved by any method for connecting them detachably, such as inserting or press fitting.

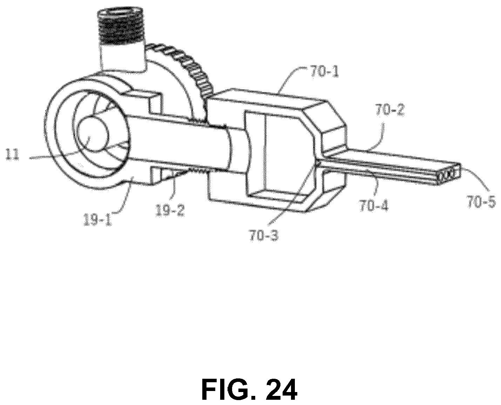

The nozzle module 70 includes the body portion 70-1 and the fluid discharge portion 70-2. As shown in Figs. 23 and 24, which are cross-sectional views of the nozzle assembly 490 of the present embodiment, cavities are formed in the body portion 70-1 and the fluid discharge portion 70-2 to allow the coolant to flow through the nozzle module 70. A plurality of flow paths 70-4 are formed in the interior space of the fluid discharge portion 70-2. Since a path through which the coolant flows is sharply narrowed between the body portion 70-1 and the fluid discharge portion 70-2 of the nozzle module 70 as shown in Fig. 23, the coolant is discharged from an end (i.e. an outlet) 70-5 of each of the plurality of flow paths 70-4 at a high pressure. Further, an inlet 70-3 of each of the plurality of flow paths 70-4 is formed at a connecting portion of the body portion 70-1 and the fluid discharge portion 70-2 of the nozzle module 70. As shown in Figs. 23 and 24, the inlet 70-3 has a guide portion formed to guide the fluid (for example, a protrusion, a recess, or a combination of thereof). The guide portion guides the coolant to each of the flow paths 70-4, thereby improving the discharging effect of the coolant. More specifically, a part or all of the plurality of inlets 70-3 may individually have the guide portion protruding from the surface of the connecting portion of the body portion 70-1 and the fluid discharge portion 70-2 toward the body portion 70-1. Alternately, a part or all of the plurality of inlets 70-3 may individually have the guide portion which is an edge of a recess formed in the surface of the connecting portion of the body portion 70-1 and the fluid discharge portion 70-2.

In the following, a method for assembling the nozzle assembly 490 will be described with reference to Figs. 21A and 21B. First, the first step portion 11-2 and the ring 11-3 of the supporting member 11 of the base module 210 are fitted to an one end of the connecting member 12, and thus the supporting member 11 and the connecting member are aligned. Then, the packing element 13 is positioned at the other end of the connecting member 12, and the packing element 18 is positioned at an end of the second step portion 11-5. A protrusion formed at one end of the fixing member 19 is inserted into a recess formed at the other end of the connecting member 12 together with the packing element 13. At this time, the second shaft portion 11-6 is screwed into the screw hole formed in the end portion of the through-hole 19-3 of the fixing member 19, and the second step portion 11-5 and the packing element 18 prevent the leakage of the coolant. Then, the E-ring 17 is installed on the end portion 11-7 exposed out of the through-hole 19-3 of the fixing member 19. By this, assembly of the base module 210 is completed. Further, the connection pipe 19-2 of the fixing member 19 and the body portion 70-1 of the nozzle module 70 are detachably connected by the screw-joining (and/or any other method). Thus, assembly of the nozzle assembly 490 is completed.

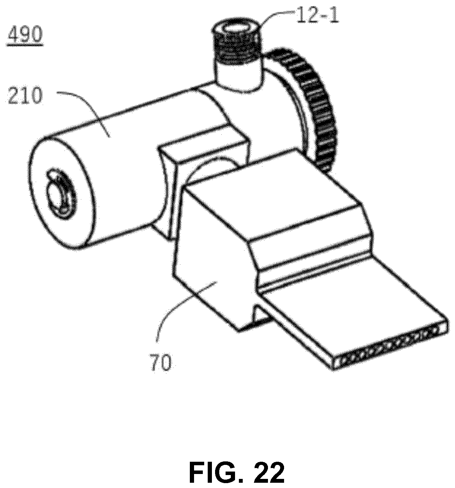

Fig. 22 is a perspective view of the nozzle assembly 490 formed by assembling the components of the based module 210 and the nozzle module 70 as described above. When the coolant inlet portion 12-1 of the nozzle assembly 490 is connected to the end of the coolant pipe 8 (for example, by the screw-joining) and the coolant flows into the coolant pipe 8, the coolant passes through the interior space of the base module 210 and flows into each of the plurality of flow paths 70-4 of the nozzle module 70. Then, the coolant is discharged toward the grinding blade 2 and the workpiece W1 through the outlets 70-5. More particularly, the plurality of flow paths 70-4 are formed in parallel in a direction orthogonal to the shaft portions of the supporting member 11 (i.e. the first shaft portion 11-4 and the second shaft portion 11-6), and the coolant is discharged from the outlet 70-5 of each of the plurality of flow paths 70-4. The operator can adjust the angle of the nozzle module 70 with respect to the ground by manually rotating the dial-type handle 11-1. Thus, it is possible to dispose the nozzle module 70 at an optimum position for discharging the coolant toward the grinding spot G at which the workpiece W1 is ground by the grinding blade 2.

The shape of the cross-section of the flow path 70-4 is not limited to the circle, and may be one of various cross-sectional shapes as shown in (A) to (F) of Fig. 18. In the case that the coolant is discharged through the flow path 70-4 having a cross-section in which the plurality of small holes arranged in the predetermined manner, the star-shaped hole, the polygonal hole, or the flower-shaped hole are/is formed as shown in Fig. 18, it is possible to increase the discharge pressure or suppress the dispersion of the coolant as compared with the flow path having one circular outlet. Each of the plurality of small holes is, for example, the circular hole, the star-shaped hole, the polygonal hole, or the flower-shaped hole. In particular, by using the flow path having the star-shaped outlet as shown in (D) of Fig. 18, it is possible to prevent the dispersion of the coolant in a direction different from the direction in which the coolant is discharged and increase the discharge pressure. The star-shaped hole is not limited to (D) in Fig. 18, and may have five or more vertices. The polygonal hole is not limited to the hexagon shown in (E) of Fig. 18, and may be a polygon with five (5) vertices (i.e. the pentagon) or more vertices. The cross-section of each of the flow paths may have a shape other than those described above. In addition, the flower-shaped hole shown in (F) of Fig. 18 can prevent the dispersion of the coolant in a direction different from the direction in which the coolant is discharged, and reduce the fluid pressure loss of the coolant. The number of petals of the flower is not limited to four, and may be two or more. For example, the number of petals can be six or eight.

In the present embodiment, the base module 210 and the nozzle module 70 are manufactured as separate components. Thus, nozzle modules having different numbers of the flow paths, different flow path diameters, different flow path cross-sections, or the like, can be easily detachably and changeably connected to the base module 210 according to the kind of the grinding machine, the size of the grinding blade, or the like.

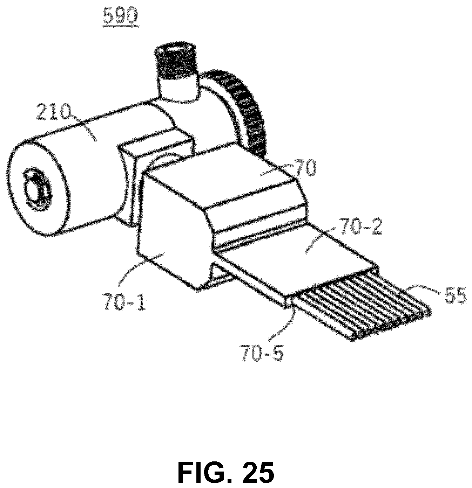

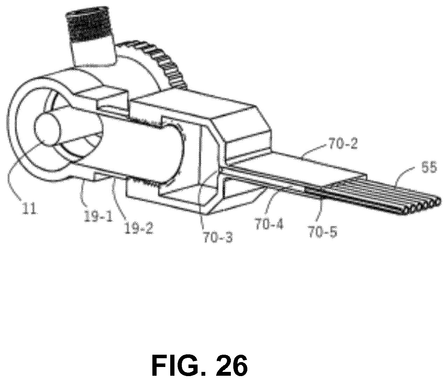

Fig. 25 shows a nozzle assembly 590 according to an eighth embodiment of the present invention. The nozzle assembly 590 has a configuration in which the multi-nozzles 55 are added to the nozzle assembly 490 according to the seventh embodiment. The multi-nozzles 55 includes a plurality of nozzles, and each of the plurality of nozzles is inserted into each of the plurality of flow paths 70-4 formed inside the fluid discharge portion 70-2 of the nozzle module 70 in parallel in a direction orthogonal to the shaft portions of the supporting member 11 (i.e. the first shaft portion 11-4 and the second shaft portion 11-6), as shown in Fig. 26, which is a cross-sectional view of the nozzle assembly 590 of Fig. 25. By this, the coolant entering the interior space of the nozzle module 70 can flow into the plurality of nozzles. Each of the plurality of nozzles is detachably connected to the fluid discharge portion 70-2 of the nozzle module 70. Each of the plurality of nozzles is inserted such that its inlet-side end reaches the coolant inlet 70-3 of the nozzle module 70, or reaches a predetermined position in the flow path 70-4. Further, the fluid discharge portion 70-2 of the nozzle module 70 serves to support the multi-nozzles 55 so that the coolant can be discharged at a high pressure. Thus, the distance from the fluid discharge portion 70-2 of the nozzle module 70 to the grinding blade 2 or the workpiece W1 can be optimized by adjusting the length from the end of the flow path 70-4 to the outlet of the nozzle (or a pipe). By this, it is possible to effectively reduce or eliminate the heat generated during grinding. It is preferable that the plurality of nozzles (or pipes) are held so as to individually move in and out of the flow paths 70-4. In other words, each of the plurality of nozzles is inserted from the end 70-5 of each of the plurality of flow paths 70-4 of the fluid discharge portion 70-2 and held such that it can move in and out of the flow path 70-4, thereby changing the length from the end 70-5 of the flow path 70-4 to the outlet of the nozzle.

Generally, the shape of the cross-section of the tube portion of each nozzle of the multi-nozzles 55 is the same as the shape of the end at which the outlet is formed. The shape of the tube portion of the nozzle is not limited to the circular pipe as described above, and the tube portion may have one of various cross-sectional shapes as shown in (A) to (F) of Fig. 19. Each nozzle has one or a plurality of holes through it, and the one or the plurality of holes form one or a plurality of flow paths. In the case that the coolant is discharged through the nozzle having a cross-section in which the plurality of small holes, the star-shaped hole, the polygonal hole, or the flower-shaped hole are/is formed as shown in (A) to (F) of Fig. 19, it is possible to increase the discharge pressure or suppress the dispersion of the coolant as compared with the nozzle having one circular outlet. Each of the plurality of small holes is, for example, the circular hole, the star-shaped hole, the polygonal hole, or the flower-shaped hole. In particular, by using the nozzle having the star-shaped outlet as shown in (D) of Fig. 19, it is possible to prevent the dispersion of the coolant in a direction different from the direction in which the coolant is discharged and increase the discharge pressure. The star-shaped hole is not limited to (D) in Fig. 19, and may have five or more vertices. The polygonal hole is not limited to the hexagon shown in (E) of Fig. 19, and may be a polygon with five (5) vertices (i.e. the pentagon) or more vertices. The cross-section of the nozzle may have a shape other than those described above. In addition, the flower-shaped hole shown in (F) of Fig. 19 can prevent the dispersion of the coolant in a direction different from the direction in which the coolant is discharged, and reduce the fluid pressure loss of the coolant. The number of petals of the flower is not limited to four, but may be two or more.

In the present embodiment, the base module 210 and the nozzle module 70 are manufactured as separate components. Thus, nozzle modules having different numbers of the flow paths (i.e. different numbers of the nozzles), different flow path diameters (i.e. different nozzle diameters), different flow path cross-sections (i.e. different nozzle cross-sections), or the like, can be easily detachably and changeably connected to the base module 210 according to the kind of the grinding machine, the size of the grinding blade, or the like.

Fig. 27 shows another example of a machine tool including the nozzle assembly 490 of the seventh embodiment of the present invention. The machine tool of this example is the cylindrical grinding machine. A cylindrical grinding machine 600 includes a grinding blade 602, a protection cover 604, a position adjusting unit 606, a coolant pipe 608, and the nozzle assembly 490. As described above, the nozzle assembly 490 includes the base module 210 and the nozzle module 70. Although not shown in Fig. 27, the cylindrical grinding machine 600 may include a transfer device which rotates the workpiece W2 by supporting it at the center of its both end faces and moves it along the central axis (i.e., in the Z-axis direction). The grinding blade 602 is rotationally driven in the clockwise direction in the plane of Fig. 27 by the driving source (not shown in the drawing). A surface of the workpiece W2 is ground by friction between the outer circumferential surface of the grinding blade 602 and the surface of the workpiece W2 contacting the grinding blade 602. The protection cover 604 surrounds the grinding blade 602 rotating at a high speed and protects workers around the grinding machine by preventing chips of the workpiece W2 from scattering during grinding.

The position adjusting unit 606 is provided on the protection cover 604, and fixes the coolant pipe 608 movable in the X-axis direction at a desired position. By this, the nozzle assembly 490 connected to the coolant pipe 608 can be disposed at the optimum position for discharging the coolant toward the grinding spot G at which the workpiece W2 is ground by the grinding blade 602. The nozzle assembly 490 is connected to one end of the coolant pipe 608, and a tank in which the coolant is stored (not shown in the drawing) is connected to the other end of the coolant pipe 608. The base module 210 connects the nozzle module 70 and the coolant pipe 608 to allow the coolant to flow into the nozzle module 70 through the coolant pipe 608. Further, the base module 210 fixes the ends 70-5 of the flow paths 70-4 of the nozzle module 70 at a proper position. In addition, the nozzle assembly 590 according to the eighth embodiment can also be applied to the cylindrical grinding machine 600. In this case, the end of each nozzle (or the pipe) of the multi-nozzles 55 can be disposed at an optimum position for discharging the coolant toward the grinding spot G at which the workpiece W2 is ground by the grinding blade 602.

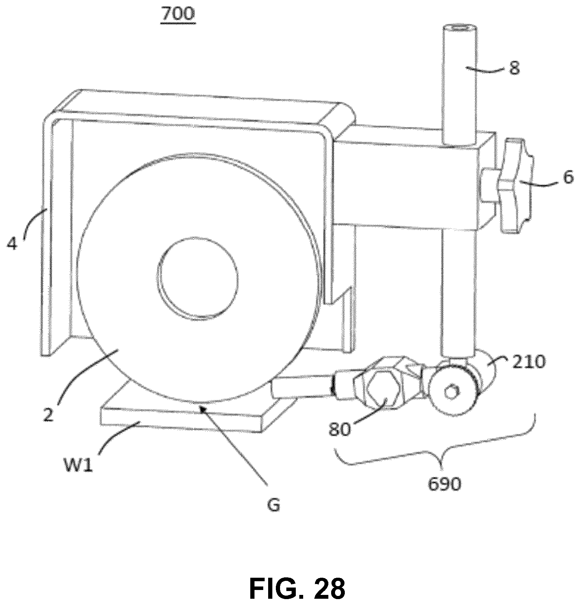

Fig. 28 shows an example of a machine tool including a nozzle assembly according to a ninth embodiment of the present invention. The machine tool of the present example is a surface grinding machine 700. The surface grinding machine 700 is provided with a nozzle assembly 690 which includes the base module 210 and a nozzle module 80. The base module 210 is the nozzle fixing structure and connects the nozzle module 80 and the coolant pipe 8 to allow the coolant (for example, water or oil) to flow into the nozzle module 80 through the coolant pipe 8. Further, the base module 210 fixes a fluid discharge portion 80-2 of the nozzle module 80, which will be described later, at a suitable position with respect to the grinding spot G. Since other components of the surface grinding machine 700 except for the nozzle assembly 690 are the same as those of the first embodiment and the base module 210 is the same as that of the seventh embodiment, detailed descriptions thereof will be omitted.

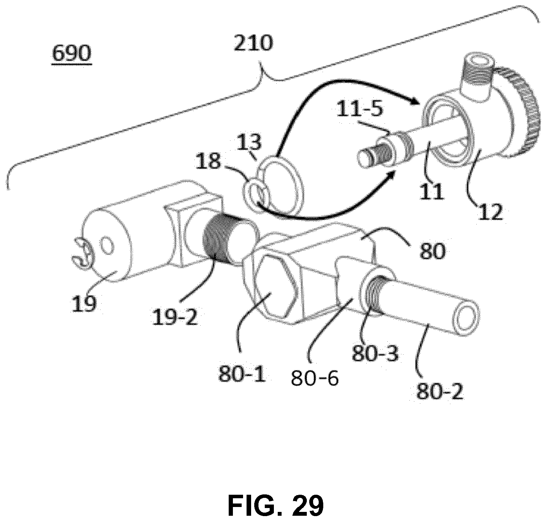

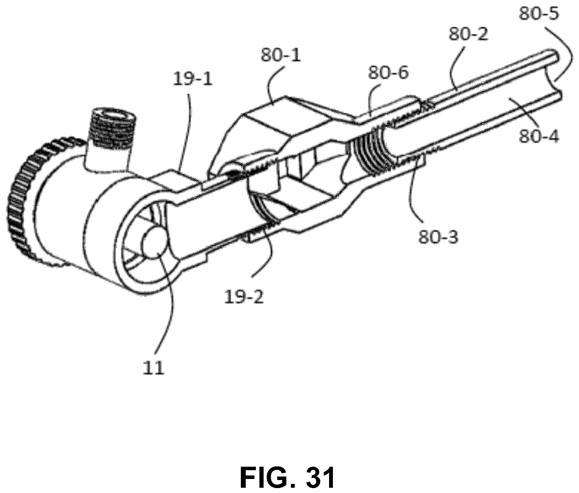

Fig. 29 shows a state in which components of the base module 210 (see Fig. 21A) and the nozzle module 80 of the nozzle assembly 690 are being assembled. The fixing member 19 includes the head portion 19-1 and the connection pipe 19-2. A male screw is formed on the outer circumferential surface of the connection pipe 19-2 and a female screw is formed in a body portion 80-1 of the nozzle module 80 (see Fig. 31). Thus, the connection pipe 19-2 of the fixing member 19 and the body portion 80-1 of the nozzle module 80 are connected by screw joining. The connection pipe 19-2 passes through the neck of the head portion 19-1 so that the coolant entering the nozzle assembly 690 through the coolant pipe 8 can flow to the connection pipe 19-2. The connection between the fixing member 19 and the body portion 80-1 of the nozzle module 80 is not limited to the screw-joining, but may be achieved by any method for connecting them detachably, such as inserting or press fitting.

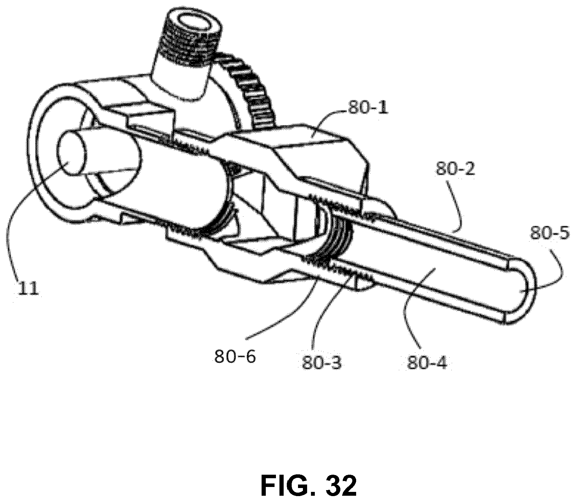

The nozzle module 80 includes the body portion 80-1 and the fluid discharge portion 80-2 (which is a nozzle formed in the shape of a circular pipe in the present example). The body portion 80-1 and the fluid discharge portion 80-2 are made of metal (for example, stainless steel). A female screw is formed on the inner surface of the protruding portion 80-6 of the body portion 80-1 and a male screw is formed on a corresponding part of the fluid discharge portion 80-2 (i.e. an inlet 80-3). Thus, the body portion 80-1 and the fluid discharge portion 80-2 are connected by screw-joining. The connection between the body portion 80-1 and the fluid discharge portion 80-2 is not limited to the screw-joining, but may be achieved by any method for connecting them detachably, such as inserting or press fitting. As shown in Figs. 31 and 32 which are cross-sectional views of the nozzle assembly 690 according to the present embodiment, cavities are formed in the body portion 80-1 and the fluid discharge portion 80-2 formed in the shape of the circular pipe to allow the coolant to flow through the nozzle module 80. As shown in Fig. 31, the cavity of the body portion 80-1 (i.e. a hollow interior space of the body portion 80-1) has a wide width in the direction parallel to the shaft portions of the supporting member 11 of the base module 210 (i.e. the first shaft portion 11-4 and the second shaft portion 11-6). Thus, a path through which the coolant flows in the fluid discharge portion 80-2 of the nozzle module 80 is narrower than that in the body portion 80-1 of the nozzle module 80 and the coolant is discharged from an end 80-5 of the fluid discharge portion 80-2 at a high pressure. A flow path 80-4 is formed in an interior space of the fluid discharge portion 80-2 and the inlet 80-3 of the flow path 80-4 is formed at a connecting portion of the body portion 80-1 and the fluid discharge portion 80-2 of the nozzle module 80.

Referring to Fig. 29, a method for assembling the nozzle assembly 690 is described. The base module 210 is assembled by the method described with respect to the seventh embodiment. The connection pipe 19-2 of the fixing member 19 and the body portion 80-1 of the nozzle module 80 are detachably connected by the screw-joining (and/or any other method). Then, the body portion 80-1 and the fluid discharge portion (i.e., the nozzle) 80-2 are connected by the screw-joining (and/or any other method). By this, the assembly of the nozzle assembly 690 is completed.

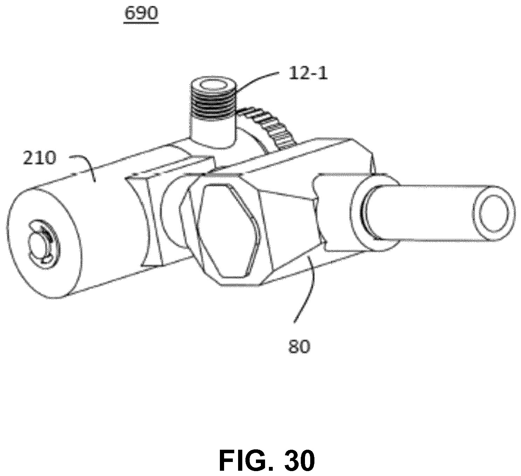

Fig. 30 is a perspective view of the nozzle assembly 690 formed by assembling the components of the base module 210 and the nozzle module 80 as described above. When the coolant inlet portion 12-1 of the nozzle assembly 690 is connected to the end of the coolant pipe 8 (for example, by the screw-joining) and the coolant flows into the coolant pipe 8, the coolant passes through the interior space of the base module 210 and flows into the flow path 80-4 of the nozzle module 80. Then, the coolant is discharged toward the grinding blade 2 and the workpiece W1 through the end 80-5 of the flow path 80-4. More particularly, the flow path 80-4 of the fluid discharge portion 80-2 is disposed in a direction orthogonal to the shaft portions of the supporting member 11 (i.e. the first shaft portion 11-4 and the second shaft portion 11-6), and the coolant is discharged from the end 80-5 of the flow path 80-4. The operator can adjust the angle of the nozzle module 80 with respect to the ground by manually rotating the dial-type handle 11-1. Thus, it is possible to dispose the nozzle module 80 at an optimum position for discharging the coolant toward the grinding spot G at which the workpiece W1 is ground by the grinding blade 2.

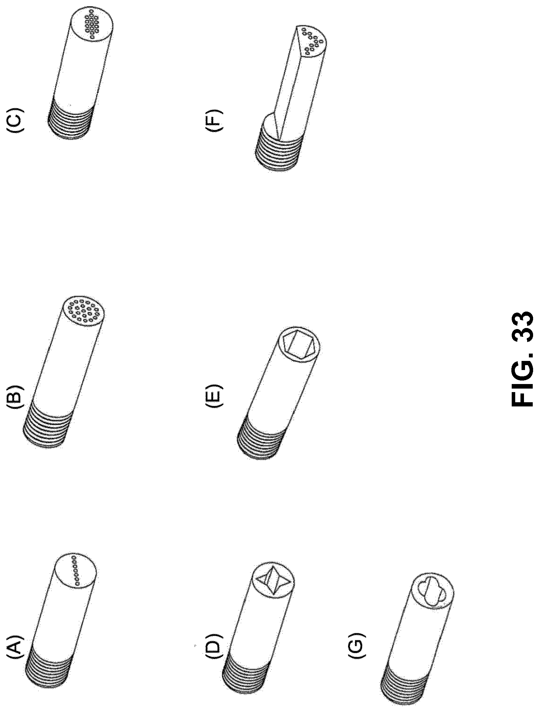

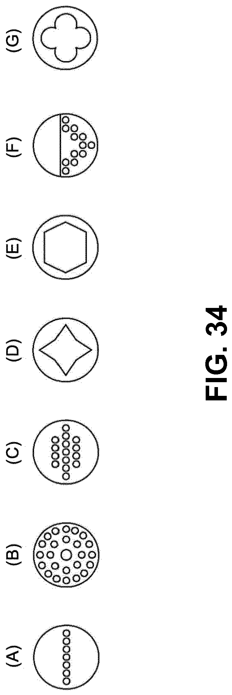

The shape of a tube portion of the fluid discharge portion (i.e. the nozzle) 80-2 is not limited to the circular pipe, and the tube portion may have one of various cross-sectional shapes as shown in (A) to (G) of Fig. 33. Fig. 34 shows cross-sectional views corresponding to (A) to (G) of Fig. 33. Generally, the shape of the cross-section the tube portion of the nozzle is the same as the shape of the end at which the outlet is formed. The fluid discharge portion, i.e. the nozzle has one or a plurality of holes through it, and the one or the plurality of holes form one or a plurality of flow paths in the nozzle. In the case that the coolant is discharged through the flow path 80-4 having a cross-section in which a plurality of small holes arranged in a predetermined manner, the star-shaped hole, the polygonal hole, or the flower-shaped hole are/is formed as shown in (A) to (G) of Fig. 34, it is possible to increase the discharge pressure or suppress the dispersion of the coolant because the flow path is narrow as compared with the nozzle having one circular outlet. Each of the plurality of small holes is, for example, the circular hole, the star-shaped hole, the polygonal hole, or the flower-shaped hole. In the case that the nozzle has the plurality of small holes, a plurality of flow paths of the coolant are arranged in parallel in a direction orthogonal to the shaft portions of the supporting member 11 (i.e. the first shaft portion 11-4 and the second shaft portion 11-6). In particular, by using the nozzle having the star-shaped outlet as shown in (D) of Fig. 33 and (D) of Fig. 34, it is possible to prevent the dispersion of the coolant in a direction different from the direction in which the coolant is discharged and increase the discharge pressure. The star-shaped hole is not limited to (D) in Figs. 33 and 34, and may have five or more vertices. The polygonal hole is not limited to the hexagon shown in (E) of Figs. 33 and 34, and may be a polygon with five (5) vertices (i.e. the pentagon) or more vertices. The cross-section of the nozzle may have a shape other than those described above. In addition, an upper part of the nozzle may be cut and flattened and the small holes may be arranged in a V-shape in accordance with the shape of the blade, as shown in (F) of Figs. 33 and 34. The small holes may be arranged in a different form from those described above. The flower-shaped hole shown in (G) of Figs. 33 and 34 can prevent the dispersion of the coolant in a direction different from the direction in which the coolant is discharged, and reduce the fluid pressure loss of the coolant. The number of petals of the flower is not limited to four, and may be two or more (an even number or an odd number). In the case that the number is an even number, the flower may have 6 or 8 petals, for example. Since the fluid discharge portion (i.e. the nozzle) 80-2 is detachably connected to the body portion 80-1, for example, by the screw-joining, it can be easily replaced as appropriate according to grinding blades and processing conditions of the workpiece.

In the present embodiment, the base module 210 and the nozzle module 80 are manufactured as separate components. Thus, nozzle modules having different flow path cross-sections (i.e. different outlet shapes) can be easily detachably and changeably connected to the base module 210 according to the kind of the grinding machine, the size of the grinding blade, or the like.

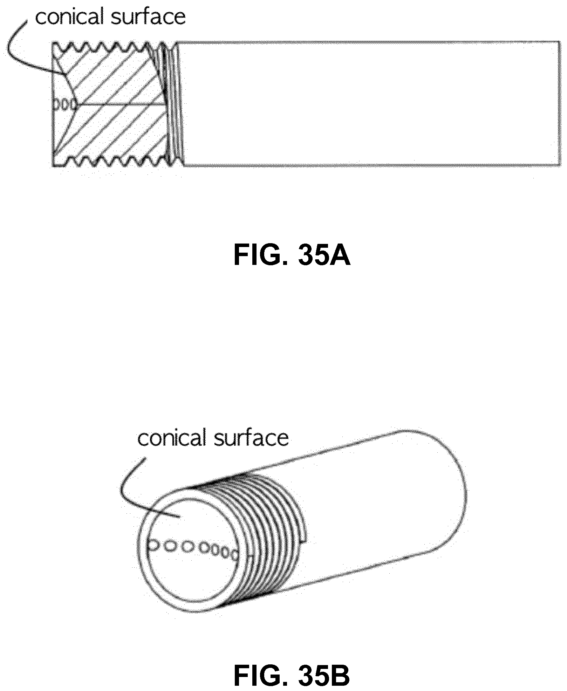

Figs. 35A and 35B show the structure of an inlet of the fluid (for example, the coolant) of the nozzle in which the plurality of small holes are arranged in a row shown in (A) of Fig. 33 and (A) of Fig. 34. Fig. 35A is a partial cross-sectional view of the nozzle and Fig. 35B is a perspective view showing the exterior of the nozzle. As can be understood from the drawings, an inlet-side end surface of the nozzle is not flat but conical so as to guide the fluid into flow paths formed by the plurality of small holes. The angle of the apex of the cone (i.e. an apex angle) is, for example, 120 degrees, but this angle may be properly changed according to the viscosity of the fluid. It is desirable to select the angle such that the fluid can be optimally discharged from the outlet.

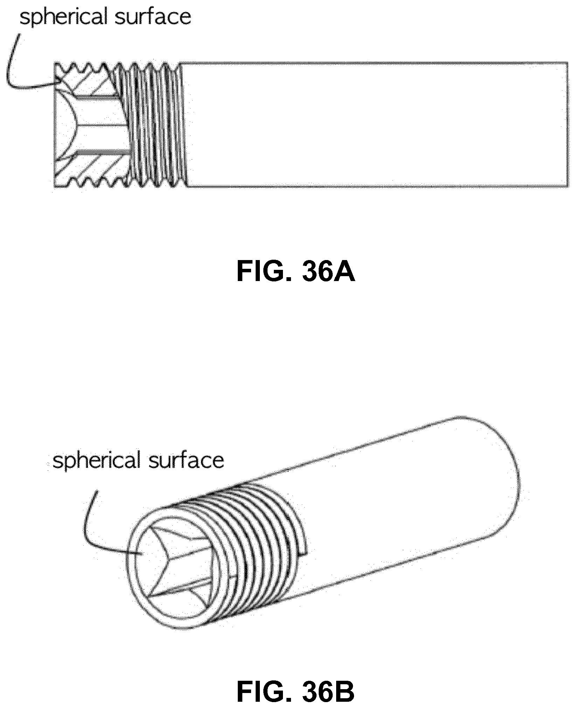

Figs. 36A and 36B show the structure of an inlet of the fluid (for example, the coolant) of the nozzle in which the star-shaped hole is formed shown in (D) of Fig. 33 and (D) of Fig. 34. Fig. 36A is a partial cross-sectional view of the nozzle and Fig. 36B is a perspective view showing the exterior of the nozzle. As can be understood from the drawings, an inlet-side end surface of the nozzle is not flat but spherical so as to guide the fluid into a flow path with a star-shaped cross-section. The radius of the spherical surface is almost the same as the radius of the nozzle, but it may be properly changed according to the viscosity of the fluid. It is desirable to select the radius of the spherical surface such that the fluid can be optimally discharged from the outlet.

Although the nozzles having two types of flow paths shown in (A) and (D) of Figs. 33 and 34 have been described in the above, it is also possible to work the inlet-side end surface of the nozzle shown in (B), (C), (E), (F), or (G) of Figs. 33 and 34 into the conical shape, the spherical shape, or a different shape in order to guide the fluid. In addition, it is possible to guide the fluid by forming a protrusion and/or a recess only around each hole into which the fluid flows. In another embodiment, no such structure for guiding the fluid is formed in the nozzle.

In the present embodiment, the base module 210 and the nozzle module 80 are manufactured as separate components. Thus, nozzle modules having different numbers of the flow paths, different flow path diameters, different flow path cross-sections, or the like, can be easily detachably and changeably connected to the base module 210 according to the kind of the grinding machine, the size of the grinding blade, or the like.

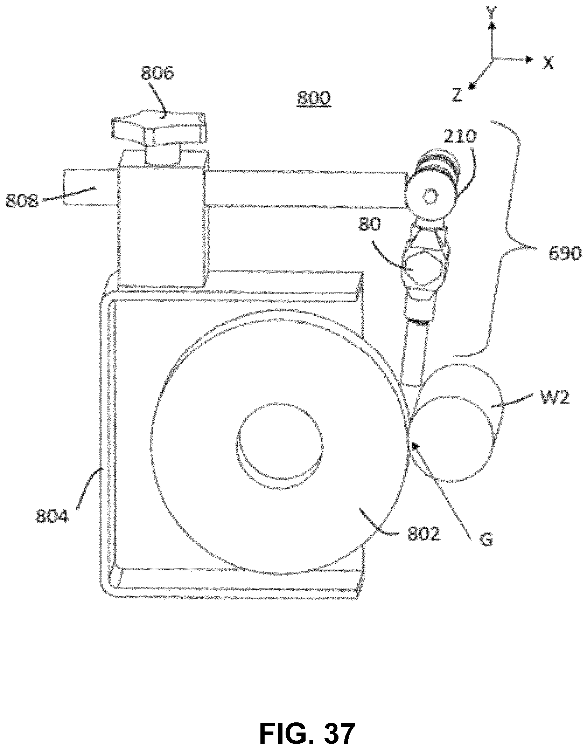

Fig. 37 shows another example of a machine tool including the nozzle assembly 690 of the ninth embodiment of the present invention. The machine tool of this example is the cylindrical grinding machine. A cylindrical grinding machine 800 includes a grinding blade 802, a protection cover 804, a position adjusting unit 806, a coolant pipe 808, and the nozzle assembly 690. As described above, the nozzle assembly 690 includes the base module 210 and the nozzle module 80. Since the features and functions of the grinding blade 802, the protection cover 804, the position adjusting unit 806, and the coolant pipe 808 are similar to those of the grinding blade 302, the protection cover 304, the position adjusting unit 306, and the coolant pipe 308 of the cylindrical grinding machine 300 shown in Fig. 13, detailed descriptions thereof will be omitted. The base module 210 fixes the end 80-5 of the fluid discharge portion 80-2 (or the fluid path 80-4) nozzle of the nozzle module 80 at a proper position and optimizes the discharge of the coolant.

Although some embodiments of the present invention have been described above, the embodiments are for illustrative purposes only and not intended to limit the technical scope of the present invention. It will be apparent to those skilled in the art that many other possible embodiments and various modifications of the present invention may be made in light of the specification and drawings. Although a plurality of specific terms are used herein, they are used in a generic sense only for the purpose of explanation and are not used for the purpose of limiting the invention. The embodiments and modifications fall within the scope and the spirit of the invention described in this specification and within the scope of the invention as defined in the appended claims and equivalents thereof.

## Claims

1. A nozzle assembly (9, 90, 190, 290, 390, 490, 590, 690) **characterized by** comprising:
a base module (10, 110, 210); and
a nozzle module (20, 30, 40, 50, 60, 70, 80) for discharging a fluid entering the nozzle assembly (9, 90, 190, 290, 390, 490, 590, 690) to the outside,
wherein the base module (10, 110, 210) comprises:
a supporting member (11) comprising a shaft portion (11-4 and 11-6);
a dial-type handle (11-1) for rotating the supporting member (11); and
a fixing member (16, 19) for detachably fixing the nozzle module (20, 30, 40, 50, 60, 70, 80),
the nozzle module (20, 30, 40, 50, 60, 70, 80) has one or a plurality of flow paths (54-4, 65-4, 70-4, 80-4) formed in a direction orthogonal to the shaft portion (11-4 and 11-6) of the supporting member (11) of the base module (10, 110, 210), and
the angle of the nozzle module (20, 30, 40, 50, 60, 70, 80) with respect to the shaft portion (11-4 and 11-6) of the supporting member (11) of the base module (10, 110, 210) is adjusted by manual rotation of the dial-type handle (11-1).

2. The nozzle assembly (9, 90, 190, 290, 390, 590, 690) of claim 1, **characterized in that** the nozzle module (20, 30, 40, 50, 60, 80) comprises one or a plurality of nozzles (21 to 27, 31 to 33, 41 to 43, 55, 67, 80-2) arranged in a direction orthogonal to the shaft portion (11-4 and 11-6) of the supporting member (11) of the base module (10, 110, 210),
the one nozzle (80-2) or each of the plurality of nozzles (21 to 27, 31 to 33, 41 to 43, 55, 67) forms a flow path, and the fluid is discharged from an end of the one nozzle (80-2) or each of the plurality of nozzles (21 to 27, 31 to 33, 41 to 43, 55, 67).

3. The nozzle assembly (9, 90, 190) of claim 2, **characterized in that** each nozzle (21 to 27, 31 to 33, 41 to 43) comprises a head portion (21-1, 27-1), a tube portion (21-2, 27-2), and a fluid outlet (21-4, 27-3), and is detachably connected to the base module (10, 110).

4. The nozzle assembly (390) of claim 1, **characterized in that** the nozzle module (60) comprises two sections (65, 66), one section (65) of the two sections comprises the one or the plurality of flow paths (65-4) for discharging the fluid and the other section (66) of the two sections comprises one or a plurality of air nozzles (68) for discharging air.

5. The nozzle assembly (290, 390, 490, 590, 690) of claim 1, **characterized in that** the nozzle module (50, 60, 70, 80) comprises a nozzle holding member (53 and 54, 63 and 64, 70, 80) connected to the supporting member (11) of the base module (10, 210),
the nozzle holding member (53 and 54, 63 and 64, 70, 80) comprises a body portion (54-1, 65-1, 70-1, 80-1) and an extension portion (54-2, 65-2, 70-2, 80-6),
an inlet (80-3) of the one flow path (80-4) or inlets (54-3, 65-3, 70-3) of the plurality of flow paths (54-4, 65-4, 70-4) are formed at a connecting portion of the body portion (54-1, 65-1, 70-1, 80-1) and the extension portion (54-2, 65-2, 70-2, 80-6) of the nozzle holding member (53 and 54, 63 and 64, 70, 80), and at least one inlet (54-3, 65-3, 70-3, 80-3) has a guide portion for guiding the fluid.

6. The nozzle assembly (290, 390, 490, 590, 690) of claim 5, **characterized in that** the guide portion of the inlet (54-3, 65-3, 70-3, 80-3) is formed to protrude from the surface of the connecting portion of the body portion (54-1, 65-1, 70-1, 80-1) and the extension portion (54-2, 65-2, 70-2, 80-6).

7. The nozzle assembly (290, 390, 490, 590, 690) of claim 5, **characterized in that** the guide portion of the inlet (54-3, 65-3, 70-3, 80-3) is formed to be recessed from the surface of the connecting portion of the body portion (54-1, 65-1, 70-1, 80-1) and the extension portion (54-2, 65-2, 70-2, 80-6).

8. The nozzle assembly (290, 390, 590, 690) of claim 1, **characterized in that** a nozzle (55, 67) is inserted into the one flow path or each of the plurality of flow paths (54-3, 65-4, 70-4) of the nozzle module (50, 60, 70, 80) and the fluid is discharged from an end of the nozzle (55, 67, 80-2).

9. The nozzle assembly (690) of claim 1, **characterized in that** the nozzle module (80) comprises:
a hollow body portion (80-1); and
a fluid discharge portion (80-2) for discharging the fluid entering the nozzle assembly (690) to the outside which is connected to the hollow body portion (80-1),
the fluid discharge portion (80-2) comprises a nozzle in which one or a plurality of flow paths are formed in a direction orthogonal to the shaft portion (11-4 and 11-6) of the supporting member (11) of the base module (210), and
the fluid is discharged from an end (80-5) of the nozzle.

10. The nozzle assembly (9, 90, 190, 290, 390, 490, 590, 690) of claim 1, **characterized in that** the one flow path (80-4) or each of the plurality of flow paths (54-4, 65-4, 70-4) has a cross-section in which a plurality of small holes, a star-shaped hole, a polygonal hole, or a flower-shaped hole is formed.

11. The nozzle assembly (9, 90, 190, 290, 390, 490, 590, 690) of any one of claims 2, 8, and 9, **characterized in that** each nozzle (21 to 27, 31 to 33, 41 to 43, 55, 67, 80-2) has a cross-section in which a plurality of small holes, a star-shaped hole, a polygonal hole, or a flower-shaped hole is formed.

12. A nozzle (21 to 27, 31 to 33, 41 to 43, 55, 67, 80-2) **characterized in that** the nozzle can be detachably fixed to a nozzle assembly (9, 90, 190, 290, 390, 490, 590, 690) for discharging a fluid,
the nozzle (21 to 27, 31 to 33, 41 to 43, 55, 67, 80-2) has one or a plurality of holes through it, the one hole or each of the plurality of holes forming a flow path, and
the cross-section of the one hole or each of the plurality of holes is polygonal, star-shaped, or flower-shaped.

13. A nozzle fixing structure (10, 110, 210) for fixing a nozzle module (20, 30, 40, 50, 60, 70, 80) having one or a plurality of flow paths (54-4, 65-4, 70-4, 80-4) for discharging a fluid to a fluid supply apparatus (100, 200, 300, 400, 500, 600, 700, 800), comprising:
a supporting member (11) comprising a shaft portion (11-4 and 11-6);
a dial-type handle (11-1) for rotating the supporting member (11); and
a fixing member (16, 19) for detachably fixing the nozzle module (20, 30, 40, 50, 60, 70, 80),
wherein the nozzle module (20, 30, 40, 50, 60, 70, 80) is fixed such that the one or the plurality of flow paths (54-4, 65-4, 70-4, 80-4) are arranged in a direction orthogonal to the shaft portion (11-4 and 11-6) of the supporting member (11), and
the angle of the nozzle module (20, 30, 40, 50, 60, 70, 80) with respect to the shaft portion (11-4 and 11-6) of the supporting member (11) is adjusted by manual rotation of the dial-type handle (11-1).

14. A machine tool (100, 200, 300, 400, 500, 600, 700, 800) **characterized by** comprising:
a nozzle assembly (9, 90, 190, 290, 390, 490, 590, 690) of any one of claims 1 to 11,
wherein the machine tool (100, 200, 300, 400, 500, 600, 700, 800) allows coolant to be discharged through the one flow path (80-4) or the plurality of flow paths (54-4, 65-4, 70-4) of the nozzle assembly (9, 90, 190, 290, 390, 490, 590, 690) to a tool (2, 302, 602, 802) or workpiece (W1, W2) to cool it.

15. A nozzle module (50, 60, 70, 80) **characterized by** comprising:
a body portion (54-1, 65-1, 70-1, 80-1) having a cavity; and
an extension portion (54-2, 65-2, 70-2, 80-6) having one or more flow paths (54-4, 65-4, 70-4), a fluid being discharged from an end of each of the one or more flow paths (54-4, 65-4, 70-4),
wherein a path through which the fluid flows is sharply narrowed between the body portion (54-1, 65-1, 70-1, 80-1) and the extension portion (54-2, 65-2, 70-2, 80-6), and
the fluid is discharged from the end of the flow path at a high pressure.
